# EUROPÄISCHE PATENTSCHRIFT

(11) **EP 2 197 706 B1**
(45) Veröffentlichungstag und Bekanntmachung des Hinweises auf die Patenterteilung: **04.04.2012**
(21) Anmeldenummer: 08785579.7
(22) Anmeldetag: 16.08.2008
(51) Int. Cl.: B60R 1/04, B60R 1/12

(54) **VERFAHREN ZUR FAHRERINFORMATION IN EINEM KRAFTFAHRZEUG**
METHOD FOR DRIVER INFORMATION IN A MOTOR VEHICLE
PROCÉDÉ D'INFORMATION DU CONDUCTEUR DANS UN VÉHICULE

(30) Priorität: 18.09.2007 DE 102007044535
(43) Veröffentlichungstag der Anmeldung: 23.06.2010
(73) Patentinhaber: Bayerische Motoren Werke Aktiengesellschaft, 80809 München (DE)
(72) Erfinder: AUGST, Alexander, 80937 München (DE)
(74) Vertreter: Kammermeier, Peter Frank
(86) Internationale Anmeldenummer: PCT/EP2008/006737
(87) Internationale Veröffentlichungsnummer: WO 2009/036848

(56) Entgegenhaltungen:
- DE-A1- 10 246 652
- DE-A1- 19 961 313
- DE-A1-102006 008 703
- DE-U1- 20 118 868

## Beschreibung

Die Erfindung betrifft ein Verfahren zur Fahrerinformation in einem Kraftfahrzeug, bei dem durch Aufnahmemittel des Kraftfahrzeugs ein Bildstrom aufgenommen wird, der Bilder zumindest eines Teils der Umgebung des Kraftfahrzeugs beinhaltet, bei dem durch eine Anzeigeeinheit im Fahrzeuginneren des Kraftfahrzeugs zumindest ein Bildausschnitt des Bildstroms wiedergegeben wird, und bei dem durch eine Anzeigesteuerungseinheit des Kraftfahrzeugs der Umgebungsausschnitt, der dem Fahrer durch die Wiedergabe des Bildausschnitts mittels der Anzeigeeinheit dargestellt wird, selbsttätig verändert wird.

Solche Verfahren sind bekannt aus der die Merkmale des Oberbegriffs des Anspruchs 1 zeigenden DE 100 36 875 A1, aus der EP 1 211 132 A2 und aus der DE 20 2006 015 992 U1. Beispielsweise kann eine Überwachung der rückwärtigen Fahrzeugumgebung durch die in diesen Dokumenten beschriebenen Vorrichtungen dahingehend verbessert werden, dass eine Kamera zur Rückraumüberwachung unmittelbar am Fahrzeugheck angeordnet wird, wodurch sie eine geeignetere Blickposition auf die nähere rückwärtige Fahrzeugumgebung besitzt als ein prinzipbedingt vorderhalb des Fahrersitzes anzuordnender Rückspiegel. Jedoch gehen die oben angegebenen Schriften nicht auf Maßnahmen zur Unterstützung des Bedieners bei der Interpretation des dargestellten Umgebungsausschnitts ein.

Das Dokument D4 offenbart ein Verfahren zum Betrieb eines Darstellungssystems in einem Fahrzeug mit einer Kamera, mit der ein Beobachtungsbereich in der Umgebung des Fahrzeugs aufgenommen wird, mit einer Bildverarbeitungseinheit, in der die von der Kamera kommenden Bilddaten verarbeitet werden, einem Bildschirm im Fahrzeuginnenraum, an dem die von der Bildverarbeitungseinheit kommenden Bilddaten als Bild angezeigt werden, einem Sensorsystem, mit dem die Fahrzeugbewegung erfasst und als Bewegungsdaten an die Bildverarbeitungseinheit weitergeleitet wird. Dabei wird zu einem Startzeitpunkt eine Fahrzeugposition als Startpunkt festgelegt, das Fahrzeug wird ausgehend vom Startpunkt weiterbewegt, der Drehwinkel des Fahrzeugs um seine Vertikalachse wird ausgehend von der Orientierung im Startpunkt vom Sensorsystem erfasst und die von der Kamera kommenden Bilddaten werden in der Bildverarbeitungseinheit unter Einbeziehung des jeweils aktuellen Drehwinkels des Fahrzeugs derart verarbeitet, dass die Orientierung von am Bildschirm im Bild dargestellten Objekten aus dem Beobachtungsbereich der Orientierung zum Startzeitpunkt entspricht.

Es ist eine Aufgabe der Erfindung, ein Verfahren zu schaffen, durch welches ein Bediener verbessert bei der Interpretation des dargestellten Umgebungsausschnitts unterstützt wird.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Erfindungsgemäß nehmen Aufnahmemittel des Kraftfahrzeugs einen Bildstrom (z.B. MPEG Videostream oder Sequenz von Vollbildern) auf, der Bilder zumindest eines Teils der Umgebung des Kraftfahrzeugs beinhaltet, und eine Anzeigeeinheit im Fahrzeuginneren gibt zumindest einen Bildausschnitt dieses Bildstroms wieder. Beispielsweise können die Aufnahmemittel einen Bildstrom mit 1920 x 1080 Bildpunkten liefern und die Anzeigeeinheit gibt einen rechteckigen Ausschnitt von 240 x 180 Bildpunkten aus diesem Bildstrom wieder. Der durch die Anzeigeeinheit, beispielsweise ein TFT-Display, dargestellte Umgebungsausschnitt ist somit festgelegt zum einen durch die Festlegung des Bildausschnitts des Bildstroms, zum anderen durch die Festlegung des Teils der Umgebung, der in dem Bildstrom abgebildet ist. Der Bildstrom selbst kann dabei schon auf einen relativ engen Teil der Umgebung beschränkt sein, beispielsweise den Rückraum des Fahrzeugs. Der Bildstrom kann aber im entgegengesetzten Extremfall auch als Panoramaansicht der Fahrzeugumgebung ausgebildet sein. Als Aufnahmemittel können insbesondere eine oder mehrere Kameras dienen nicht-erfindungsgemäβ müssen im Falle mehrerer Kameras, die gemeinsam gleichzeitig oder wechselweise als Aufnahmemittel dienen, durch die einzelnen Kameras nicht gezwungenermaßen überlappende oder aneinander angrenzende Teile der Umgebung aufgenommen werden.

Bei dem erfindungsgemäßen Verfahren wird ferner durch eine Anzeigesteuerungseinheit des Kraftfahrzeugs der Umgebungsausschnitt, der dem Fahrer durch die Wiedergabe des Bildausschnitts mittels der Anzeigeeinheit dargestellt wird, selbsttätig verändert, beispielsweise an veränderte Umgebungsbedingungen oder eine Positionsänderung des Kraftfahrzeugs angepasst. Um den Umgebungsausschnitt anzupassen, kann gemäß den obigen Ausführungen insbesondere der aufgenommene Teil der Umgebung angepasst werden, indem nicht-erfindungsgemäβ eine als Aufnahmemittel dienende Kamera verschwenkt wird oder nicht erfindungsgemäβ auf eine andere Kamera umgeschaltet wird, und/oder erfindungsgemäβ der wiedergegebene Bildausschnitt angepasst wird. Im obigen Beispielfall eines rechteckigen Bildausschnitts kann insbesondere dessen Position im ursprünglich von den Aufnahmemitteln gelieferten Bildstrom verändert werden. Unter einer Festlegung oder Anpassung des Umgebungsausschnitts ist insofern selbstverständlich kein aktiver Eingriff in die Umgebung zu verstehen, sondern eine der oben angesprochenen auf Aufnahme und/oder Wiedergabe bezogenen Maßnahmen. Insbesondere kann aus Sicht eines die Anzeigeeinheit betrachtenden Bedieners gewissermaßen ein rein virtueller Kameraschwenk bzw. eine rein virtuelle Kameraumschaltung ausgeführt werden, wenn der gewählte Bildausschnitt im weitwinklig erfassten Bild bzw. Bildstrom verschoben wird. Gegebenenfalls findet, wenn der gewählte Bildausschnitt im weitwinklig erfassten Bild bzw. Bildstrom größer oder kleiner gewählt wird, zudem ein virtueller bzw. digitaler Zoom statt, d.h. eine Veränderung des Öffnungswinkels, den eine Kamera besitzen müsste, um den dargestellten Bildausschnitt aufzunehmen.

Die Selbsttätigkeit der Veränderung des Umgebungsausschnitts entlastet den Fahrer. Jedoch kann sie ihn auch überfordern. Wie oben beschrieben, findet aus Sicht des Fahrers, wenn die Anzeigesteuerungseinheit den dargestellten Umgebungsausschnitt so anpasst, dass dem Fahrer eine Gefahrenquelle in der Fahrzeugumgebung angezeigt wird, ohne das Zutun des Fahrers ein Umschalten oder Verschwenken des dargestellten Umgebungsausschnitts statt. Insbesondere wenn dieses Umschalten oder Verschwenken sehr schnell erfolgt und/oder wenn sich der Fahrer wegen der eigentlichen Fahraufgabe nicht voll auf die Betrachtung der Anzeigeeinheit konzentrieren kann, kann es geschehen, das der Fahrer ohne weitere Unterstützung die Orientierung bezüglich des dargestellten Umgebungsausschnitts verliert. Um dies zu verhindern, wird dem Fahrer erfindungsgemäß zumindest eine optische Zusatzinformation vermittelt, der er entnehmen kann, welcher Umgebungsausschnitt ihm aktuell dargestellt wird. Mit anderen Worten wird bei der Wiedergabe des Bildausschnitts zusätzlich zur Darstellung des Umgebungsausschnitts zumindest eine optische Information betreffend die Lage des Umgebungsausschnitts bezüglich des Kraftfahrzeugs an den Fahrer ausgegeben. Dadurch wird dem Betrachter eine Möglichkeit zur Orientierung und zur Einordnung des dargestellten Umgebungsausschnitts in die Gesamtumgebung gegeben.

Die Formulierung "zusätzlich" ist dabei so zu verstehen, dass die Wiedergabe des Bildausschnitts mehr Information umfasst als eine bloße Darstellung des Umgebungsausschnitts, d.h. mehr Information als den reinen durch die Anzeigesteuerung festgelegten Bildinhalt des Bildausschnitts. Diese Information kann insbesondere "verpackt" werden in eine besondere Form der Wiedergabe des Bildausschnitts. Die Erfindung kann also umgesetzt werden alleine durch eine Wiedergabe des Bildausschnitts, wenn die Wiedergabe derart erfolgt, dass sie über den reinen Bildinhalt hinausgehende Information betreffend die Lage des Umgebungsausschnitts bezüglich des Kraftfahrzeugs vermittelt. Alternativ oder zusätzlich kann eine zusätzliche optische Anzeige ausgegeben werden, um solche Information zu vermitteln.

Unter der genannten Lage des Umgebungsausschnitts bezüglich des Kraftfahrzeugs ist zumindest eine horizontale Richtung, gegebenenfalls zudem eine vertikale Richtung, zu verstehen. Da sich die Bewegung des Kraftfahrzeugs und anderer Verkehrsteilnehmer im Wesentlichen in einer Ebene abspielt, ist vor allem die horizontale Richtung des Umgebungsausschnitts bezüglich einer Bezugsachse des Kraftfahrzeugs, beispielsweise der Fahrzeuglängsachse, für eine erfolgreiche Interpretation der Umgebungssituation durch den Fahrer entscheidend. In Sondersituationen kann jedoch auch die vertikale Richtung von Bedeutung sein, beispielsweise wenn der Bildschirmausschnitt situativ selbsttätig auf eine hoch aufragende Sehenswürdigkeit in der Fahrzeugumgebung ausgerichtet wird.

Gemäß einer bevorzugten Ausführungsform der vorliegenden Erfindung erfolgt die Wiedergabe des Bildausschnitts selbst - und somit auch die eigentliche Darstellung des Umgebungsausschnitts - in Abhängigkeit von der Lage des Umgebungsausschnitts bezüglich des Kraftfahrzeugs. Der erfinderische Gedanke wird auf diese Weise besonders elegant umgesetzt.

Der Betrachter kann bei solcher Umsetzung der Erfindung meist bereits alleine anhand der Betrachtung des Bildausschnitts, die für die Erfassung von dessen Inhalt ohnehin erforderlich ist, auch Information bezüglich der genannten Lage gewinnen. Er muss dann keine zusätzlichen Darstellungselemente interpretieren. Auch muss kein technischer Aufwand für die Bereitstellung solcher Darstellungselemente betrieben werden. Die alleine anhand der Wiedergabe des Bildausschnitts selbst vermittelte Lage-Information ist durch die meisten Betrachter zudem einfach intuitiv interpretierbar.

Gemäß einer bevorzugten Ausführungsform der vorliegenden Erfindung wird die Wiedergabe des Bildausschnitts in Abhängigkeit von der Lage des Umgebungsausschnitts bezüglich des Kraftfahrzeugs realisiert durch eine mit dieser Lage korrespondierende Anordnung des Bildausschnitts innerhalb einer größeren Anzeigefläche der Anzeigeeinheit.

Die Zuordnung zwischen Lage und Anordnung kann durch die Mehrzahl der Betrachter besonders einfach intuitiv erfolgen.

Insbesondere kann die Anzeigeeinheit in die Spiegelfläche eines Rückspiegels des Kraftfahrzeugs integriert sein. Die Anzeigeeinheit kann auch selbst als Spiegelfläche des Rückspiegels ausgebildet sein und die jeweils aktuell nicht zur Darstellung des Umgebungsausschnitts genutzte Anzeigefläche ist in einen spiegelnden Zustand versetzbar. Der Betrachter kann bei einer solchen Ausführungsform der Erfindung anhand der Anordnung des Bildausschnitts innerhalb der Spiegelfläche leicht erkennen, welcher Teil der Umgebung ihm gerade dargestellt wird. Die übrigen Teile des Spiegels bleiben dem Fahrer für die konventionelle Verwendung als Spiegel erhalten.

Gemäß einer anderen alternativ oder zusätzlich anwendbaren bevorzugten Ausführungsform der vorliegenden Erfindung wird die Wiedergabe des Bildausschnitts in Abhängigkeit von der Lage des Umgebungsausschnitts bezüglich des Kraftfahrzeugs realisiert durch eine mit dieser Lage korrespondierende Verzerrung des Bildausschnitts.

Die Verzerrung kann bewerkstelligt werden durch eine geometrische Transformation des Bildausschnitts, die beim Betrachter den Eindruck einer entsprechenden Perspektive entstehen lässt. Die Verzerrung kann alternativ oder zusätzlich auch bewerkstelligt werden durch eine Krümmung oder eine perspektivisch erzeugte virtuelle Ausrichtung des Bildausschnitts.

Auch die Zuordnung zwischen einer solchen Verzerrung und der darzustellenden Lage kann durch die Mehrzahl der Betrachter intuitiv erfolgen. Besonders wirkungsvoll ist die kombinierte Verwendung einer mit der Lage korrespondierenden Verzerrung des Bildausschnitts und einer mit der Lage korrespondierenden Anordnung innerhalb einer größeren Anzeigefläche. Auch ohne Variation der Anordnung können jedoch leicht interpretierbare Darstellungsergebnisse erzeugt werden. Insbesondere reicht ohne eine Variation der Anordnung eine kleinere Anzeigefläche aus.

Gemäß einer anderen alternativ oder zusätzlich anwendbaren bevorzugten Ausführungsform der vorliegenden Erfindung wird die Wiedergabe des Bildausschnitts in Abhängigkeit von der Lage des Umgebungsausschnitts bezüglich des Kraftfahrzeugs realisiert durch eine mit dieser Lage korrespondierende Anordnung des Bildausschnitts in einer bestimmten Ebene einer dreidimensionalen Darstellung.

Auch eine Darstellung des Umgebungsausschnitts in Abhängigkeit von einem zur Festlegung des Umgebungsausschnitts verwendeten oder aus der Festlegung des Umgebungsausschnitts resultierenden Zoomfaktors bzw. Öffnungswinkels kann vorteilhaft sein. Als bevorzugte Variante einer Wiedergabe des Bildausschnitts in Abhängigkeit von diesem Zoomfaktor bzw. Öffnungswinkel wird eine mit diesem Zoomfaktor bzw. Öffnungswinkel korrespondierende Anordnung des Bildausschnitts in einer bestimmten Ebene einer dreidimensionalen Darstellung vorgeschlagen.

Alternativ oder zusätzlich zu den bereits genannten Ausführungsformen kann die Darstellung des Umgebungsausschnitts auch begleitet sein von einer symbolischen Darstellung der Lage des Umgebungsausschnitts bezüglich des Kraftfahrzeugs.

Auch dies kann dem Betrachter eine verbesserte Orientierung und Einordnung des dargestellten Bildausschnitts in die Gesamtumgebung ermöglichen.

Die begleitende symbolische Darstellung wird vorzugsweise durch dieselbe Anzeigeeinheit dargestellt wie der Bildausschnitt selbst. Jedoch kann auch eine andere Anzeigevorrichtung im Sichtbereich des Fahrers zur Darstellung gewählt bzw. vorgesehen werden.

Alternativ oder zusätzlich kann Information bezüglich eines zur Festlegung des Umgebungsausschnitts verwendeten oder aus der Festlegung des Umgebungsausschnitts resultierenden Zoomfaktors bzw. Öffnungswinkel dem Betrachter durch eine begleitende symbolische Darstellung vermittelt werden.

Die obigen Ausführungen beschäftigen sich überwiegend mit der Darstellung eines selbsttätig durch die Anzeigesteuerungseinheit festgelegten darzustellenden Umgebungsausschnitts.

Weitere im Folgenden beschriebene bevorzugten Ausführungsformen und vorteilhafte Weiterbildungen der Erfindung fokussieren die prinzipbedingt der Darstellung vorausgehende Festlegung des darzustellenden Umgebungsausschnitts durch die Anzeigesteuerungseinheit.

Eine bevorzugte Ausführungsform der vorliegenden Erfindung verfolgt den Zweck, dem Fahrer durch den dargestellten Umgebungsausschnitt genau die Bildinhalte zu zeigen, die für ihn mit hoher Wahrscheinlichkeit von Interesse und/oder Nutzen sind. Dieser Ausführungsform liegt die Erkenntnis zugrunde, dass als von besonderem Interesse und/oder Nutzen insbesondere solche Fahrbahnbereiche zu erachten sind, die von dem Kraftfahrzeug selbst (kurz) zuvor befahren worden sind. Da die Trajektorien von im Straßenverkehr bewegten Kraftfahrzeugen typischerweise stark durch Straßenführung und Fahrspuren geprägt sind, besteht genau dort, wo sich das eigene Kraftfahrzeug kurz zuvor aufgehalten hat, eine besonders hohe Wahrscheinlichkeit, insbesondere ein nachfolgendes Kraftfahrzeug zu erblicken. Dieser Bereich ist bei Verwendung eines konventionellen Rückspiegels, der derart ausgerichtet ist, dass er einen Blick zur rückwärtigen Fahrzeugumgebung im Wesentlichen entlang der Fahrzeuglängsachse bietet, insbesondere nach starken Richtungsänderungen des Kraftfahrzeugs typischerweise nicht im Spiegelbild enthalten. Auch bekannte kamerabasierte Rückblicksysteme bieten keine Lösung zur gezielten Überwachung dieses Bereichs in solchen Situationen.

Zur Lösung dieses Problems wird eine Vorrichtung geschaffen mit Mitteln zur Bestimmung zumindest einer früheren Position des Kraftfahrzeugs, bei welcher der durch die Anzeigeeinheit dargestellte Umgebungsausschnitt selbsttätig in Abhängigkeit von der früheren Position des Kraftfahrzeugs anpassbar ist. Der Umgebungsausschnitt kann somit derart angepasst werden, dass insbesondere - ggf. sogar ausschließlich - solche Fahrbahnbereiche im Umgebungsausschnitt enthalten sind, die zuvor von dem Kraftfahrzeug befahren worden sind. Wie oben bereits ausgeführt, kann zum Anpassen des Umgebungsausschnitts insbesondere der aufgenommene Teil der Umgebung angepasst werden, indem beispielsweise eine als Aufnahmemittel dienende Kamera verschwenkt wird oder auf eine andere Kamera umgeschaltet wird, und/oder es kann der wiedergegebene Bildausschnitt angepasst werden.

Die zu bestimmende und bei der Anpassung zu berücksichtigende frühere Position kann beispielsweise definiert sein als Position zu einem bestimmten Zeitpunkt, der eine vorgegebene Zeitspanne vom aktuellen Zeitpunkt zurückliegt oder als Position, die einen der Länge nach vorgegebenen Fahrweg gegenüber der aktuellen Fahrzeugposition zurückliegt. Die zumindest eine frühere Position kann relativ, z.B. bezogen auf die aktuelle Position des Kraftfahrzeugs, bestimmt werden und/oder absolut, z.B. in GPS-Koordinaten.

Der hier verwendete Begriff der "früheren Position des Kraftfahrzeugs" kann je nach exakter Umsetzungsvariante unterschiedlich verstanden werden. Er kann verstanden werden als der oberhalb der Fahrbahnebene liegende Schwerpunkt und/oder geometrische Mittelpunkt des Kraftfahrzeugs zum jeweiligen früheren Zeitpunkt. Der Begriff kann aber auch verstanden werden als Projektion des Schwerpunkts und/oder Mittelpunkts auf die Fahrbahnebene. Ebenso kann der hier verwendete Begriff der "früheren Position des Kraftfahrzeugs" aber in Abweichung vom eigentlichen Wortlaut des Worts "Position" auch verstanden werden als ausgedehntes Volumen oder ausgedehnte Fläche. Im Sinne eines Volumens kann der Begriff verstanden werden als das zum jeweiligen früheren Zeitpunkt von dem Fahrzeug ausgefüllte Volumen, gegebenenfalls angenähert durch ein vereinfachendes geometrisches Modell, beispielsweise einen Quader. Im Sinne einer Fläche kann der Begriff verstanden werden als die zum jeweiligen früheren Zeitpunkt von dem Fahrzeug eingenommene Fläche auf der Fahrbahn, gegebenenfalls angenähert durch ein vereinfachendes geometrisches Modell, beispielsweise ein Rechteck. Auch eine solche Fläche kann wieder je nach Ausführungsform definiert sein als auf der Fahrbahn "liegend" oder als "schwebend" in einer bestimmten Höhe über der Fahrbahn, beispielsweise in Höhe des Schwerpunkts und/oder Mittelpunkts.

Wenn im Zusammenhang mit dieser Ausführungsform der Erfindung davon gesprochen wird, dass eine frühere Position in einem Umgebungsausschnitt enthalten ist und die frühere Position ist definiert als Punkt oder Fläche innerhalb der Fahrbahnebene, so ist damit gemeint, dass der Umgebungsausschnitt so festgelegt ist, dass der entsprechende Teil der Fahrbahnoberfläche im Umgebungsausschnitt enthalten ist, sofern er nicht von einem anderen Objekt verdeckt ist. Wenn im Zusammenhang mit dieser Ausführungsform der Erfindung davon gesprochen wird, dass eine frühere Position in einem Umgebungsausschnitt enthalten ist und die frühere Position ist definiert als Punkt, Fläche oder Volumen oberhalb der Fahrbahnfläche, so ist damit gemeint, dass der Umgebungsausschnitt so festgelegt ist, dass ein hypothetisches Objekt, das an diesem Punkt, in dieser Fläche oder in diesem Volumen angeordnet wäre, im Umgebungsausschnitt enthalten wäre, sofern er nicht von einem anderen Objekt verdeckt wäre.

Eine besonders einfach realisierbare Ausführungsform dieser Ausführungsform der Erfindung sieht vor, die frühere Position lediglich hinsichtlich ihrer Richtung bezogen auf die aktuelle Fahrzeugausrichtung zu bestimmen. Alleine durch die dementsprechende Wahl des Umgebungsausschnitts derart, dass dieser alleine durch Ausrichtung des effektiven Blickwinkels in dieser Richtung festgelegt ist, kann eine erhebliche Verbesserung gegenüber bekannten Systemen erreicht werden.

Wegen der geringen vertikalen Ausdehnung der verkehrsrelevanten Teile der Fahrzeugumgebung - schließlich bewegen sich das Fahrzeug und alle anderen Verkehrsteilnehmer auf der Fahrbahnoberfläche fort - kann die frühere Position insbesondere besonders wirkungsvoll lediglich hinsichtlich ihrer horizontalen Richtung bezogen auf die aktuelle Fahrzeugausrichtung bestimmt werden.

Vorzugsweise wird zusätzlich zur Richtung einer früheren Position bezogen auf die aktuelle Fahrzeugausrichtung zumindest auch die Entfernung der früheren Position bezogen auf die aktuelle Fahrzeugposition bestimmt und berücksichtigt. Diese Entfernung kann entsprechend zur Festlegung eines effektiven Zoom-Faktors des Bildausschnitts bei der Festlegung des Umgebungsausschnitts genutzt werden.

Im Folgenden wird der Einfachheit halber ohne Beschränkung der Allgemeinheit davon ausgegangen, dass wegen der oben genannten geringen vertikalen Ausdehnung der verkehrsrelevanten Teile der Fahrzeugumgebung keine vertikale Festlegung des Bildausschnitts erforderlich ist, die über diejenige vertikale Veränderung des Bildausschnitts hinausgeht, die mit einem Zoom-In oder Zoom-Out zur Veränderung des horizontalen Bildausschnitts hinausgeht. Selbstverständlich lässt sich der Gedanke der Erfindung jedoch auch unter Berücksichtigung der Notwendigkeit einer vertikalen Festlegung des Bildausschnitts sinngemäß umsetzen.

Gemäß einer besonders bevorzugten Ausführungsform der vorliegenden Erfindung umfasst die Vorrichtung Mittel zur Bestimmung einer Vielzahl früherer Positionen des Kraftfahrzeugs, ist zumindest in Abhängigkeit von dieser Vielzahl früherer Positionen ein bevorzugter Anzeigeausschnitt in der Umgebung des Kraftfahrzeugs festlegbar und ist der Umgebungsausschnitt derart anpassbar, dass im Wesentlichen dieser Anzeigeausschnitt angezeigt wird. Durch die Berücksichtigung einer Vielzahl von früheren Positionen des Kraftfahrzeugs kann der Umgebungsausschnitt in besonders vorteilhafter Weise angepasst werden.

Wie oben bereits diskutiert wurde, kann jede einzelne frühere Position als Punkt, Fläche oder Volumen ausgebildet sein. Demnach kann die Vielzahl früherer Positionen grundsätzlich als Punktmenge, als Linie, als Menge von Einzelflächen, als schlauchartige Fläche, als Menge von Einzelvolumina oder als schlauchartiges Volumen ausgebildet sein. Ohne Beschränkung der Allgemeinheit wird im Folgenden der Fall punktförmiger früherer Positionen betrachtet. Die Vielzahl früherer Positionen ist somit als Punktmenge oder Linie ausgebildet.

Die genannte Vielzahl von früheren Positionen kann z.B. als Trajektorie des Kraftfahrzeugs ausgebildet sein bzw. vorliegen. Eine solche Trajektorie kann die zurückliegende Bewegungsbahn des Kraftfahrzeugs kontinuierlich, quasi-kontinuierlich oder als Wertemenge beschreiben. Zur Begrenzung einer solchen Wertemenge oder Wertefolge kann insbesondere stets der jüngste Teil des zurückliegenden Wegs in einem Ringpuffer oder in einer anderen Speichereinheit, in der ältere Werte überschrieben werden können, aufgezeichnet werden.

Der genannte Anzeigeausschnitt kann als Soll-Umgebungsausschnitt verstanden werden. Sofern die technischen Gegebenheiten der Vorrichtung dies zulassen, kann der Umgebungsausschnitt so angepasst werden, dass der Umgebungsausschnitt exakt dem Anzeigeausschnitt entspricht. Der Umgebungsausschnitt wird dann unmittelbar in Abhängigkeit von der Vielzahl früherer Positionen festgelegt bzw. eingestellt. Gegebenenfalls sind diesbezüglich jedoch gezielt Abstriche zu machen und der Umgebungsausschnitt wird nur im Wesentlichen so angepasst, dass er dem Anzeigeausschnitt entspricht.

Im einfachsten Fall kann der Anzeigeausschnitt als Richtung bezogen auf die aktuelle Fahrzeugausrichtung festgelegt sein. Die Richtung kann jedoch beispielsweise auch ergänzt werden durch einen Zoom-Faktor.

Die früheren Positionen können als absolute Positionen bestimmt und/oder verarbeitet werden. Hierbei können beispielsweise Positionsangaben eines satellitengestützten Systems zur Positionsbestimmung (z.B. GPS) genutzt werden. In einem solchen Fall wird vorzugsweise auch der bevorzugte Anzeigeausschnitt zumindest zunächst absolut festgelegt. Ein absolut festgelegter bevorzugter Anzeigeausschnitt kann dann bei bekannter aktueller Fahrzeugposition und gegebenenfalls Fahrzeugausrichtung umgerechnet werden in einen relativ zur aktuellen Fahrzeugposition und gegebenenfalls Fahrzeugausrichtung festgelegten bevorzugten Anzeigeausschnitt.

Alternativ können als frühere Positionen ausschließlich relativ auf die aktuelle Kraftfahrzeugposition bzw. Fahrzeugausrichtung bezogene Positionen und gegebenenfalls Ausrichtungen bestimmt und/oder verarbeitet werden. Zur Bestimmung solcher relativer Werte können insbesondere Lenkwinkelsignale und/oder Geschwindigkeitssignale und/oder Beschleunigungswerte, z. B. gemessen durch ein Gyroskop, herangezogen werden.

Vorzugsweise wird der Anzeigeausschnitt so festgelegt, dass bestimmte vorgegebene Kriterien, die in Zusammenhang mit den früheren Positionen zu erfüllen sind, bestmöglich erfüllt sind.

Beispielsweise kann als Kriterium definiert sein, dass sämtliche Positionen, die das Kraftfahrzeug auf einer bestimmten zurückliegenden Fahrstrecke vorgegebener Länge (z.B. ein Meter multipliziert mit der aktuellen Geschwindigkeit bemessen in Kilometern pro Stunde) innegehabt hat, im Anzeigeausschnitt bzw. im Umgebungsausschnitt enthalten sein sollen. Ein weiteres Kriterium kann sein, dass der Anzeigeausschnitt bzw. der Umgebungsausschnitt möglichst klein zu wählen ist, um eine gute Detaildarstellung zu bieten. Wenn der Anzeigeausschnitt bzw. der Umgebungsausschnitt anhand der beiden Parameter Richtung und Zoomfaktor einstellbar ist, existiert in der Regel ein Optimalwert dieser Parameter, für welche die Gesamtheit der beiden Kriterien bestmöglich erfüllt ist.

Ganz alternativ zu einem solchen Kriterium kann beispielsweise ein Schwerpunkt der Vielzahl früherer Positionen bestimmt werden. Der Anzeigeausschnitt bzw. der Umgebungsausschnitt kann dann so festgelegt werden, dass sich dieser Schwerpunkt in der Mitte des Anzeigeausschnitts bzw. des Umgebungsausschnitts befindet. Abhängig von der Entfernung des Schwerpunkts vom Kraftfahrzeug kann ein Zoom-Faktor des Anzeigeausschnitts bzw. des Umgebungsausschnitts festgelegt werden.

Gemäß einer anderen besonders bevorzugten Ausführungsform der Erfindung wird der Anzeigeausschnitt bzw. der Umgebungsausschnitt derart festgelegt, dass er in zeitlicher Hinsicht verzögert ist gegenüber einem fiktiven gleichbleibend relativ zum Fahrzeug festgelegten Anzeigeausschnitt bzw. Umgebungsausschnitt. Eine solche zeitliche Verzögerung, die beispielsweise in der Größenordnung von einer Sekunde liegen kann, kann z.B. bei einer starken Richtungsänderung des Kraftfahrzeugs bewirken, dass der Anzeigeausschnitt und somit auch der dargestellte Umgebungsausschnitt zunächst noch in der Art und Weise erhalten bleibt, die vor der Richtungsänderung Bestand hatte. Dadurch verschwindet etwa ein nachfolgendes Fahrzeug bei einem Richtungswechsel des eigenen Kraftfahrzeugs nicht umgehend aus dem dargestellten Umgebungsausschnitt, sondern es kann beispielsweise beobachtet werden, ob auch dieses nachfolgende Fahrzeug seinen Blinker setzt oder ob es andere optische Signale (z.B. Lichthupe) abgibt, um etwa das Kraftfahrzeug, bei dem das erfindungsgemäße Verfahren abläuft, auf eine Gefahr beim Abbiegen hinzuweisen. Eine solche Verzögerung kann auch in Zusammenhang mit einer Festlegung des Anzeigeausschnitts bzw. Umgebungsausschnitts nach anderen Kriterien vorteilhaft sein.

Gemäß einer anderen besonders bevorzugten Ausführungsform der Erfindung wird der Anzeigeausschnitt bzw. der Umgebungsausschnitt derart festgelegt, dass sein zeitlicher Verlauf tiefpass-gefiltert ist gegenüber einem fiktiven gleichbleibend relativ zum Fahrzeug festgelegten Anzeigeausschnitt. Es wird also ein hochfrequenter Teil der Fahrzeugbewegung herausgefiltert bzw. kompensiert. Die Tiefpass-Filterung kann beispielsweise in einer schnell gefahrenen S-Kurve oder bei einem zügigen Spurwechsel des Kraftfahrzeugs verhindern, dass dem Fahrer der Überblick über den rückwärtigen Umgebungsbereich des Kraftfahrzeugs verloren geht. Eine solche Tiefpass-Filterung kann auch in Zusammenhang mit einer Festlegung des Anzeigeausschnitts bzw. Umgebungsausschnitts nach anderen Kriterien vorteilhaft sein.

Eine Tiefpass-Filterung und auch eine zeitliche Verzögerung werden bei vielen denkbaren Algorithmen zur Festlegung des Anzeigeausschnitts bzw. Umgebungsausschnitts bereits prinzipbedingt durch die Berücksichtigung der früheren Positionen eines zurückliegenden Zeitintervalls bestimmter Länge verursacht.

Dieser Effekt kann insbesondere reduziert werden, indem die früheren Positionen abhängig von ihrem zeitlichen Zurückliegen und/oder ihrer Entfernung von der aktuellen Fahrzeugposition mit unterschiedlicher Gewichtung in die Bestimmung des bevorzugten Anzeigeausschnitts bzw. Umgebungsausschnitts eingehen und dabei jüngere Werte stärker gewichtet werden. Auch andere Filterwirkungen sind erzielbar, wenn die früheren Positionen abhängig von ihrem zeitlichen Zurückliegen und/oder ihrer Entfernung von der aktuellen Fahrzeugposition mit unterschiedlicher Gewichtung in die Bestimmung des bevorzugten Anzeigeausschnitts bzw. Umgebungsausschnitts eingehen.

Vorzugsweise wird der bevorzugte Anzeigeausschnitt bzw. Umgebungsausschnitt orientiert an einem Gütemaß festgelegt. Dabei kann - wie bereits erwähnt - bewertet werden, ob und/oder wo die früheren Positionen des Kraftfahrzeugs im Anzeigeausschnitt bzw. Umgebungsausschnitt enthalten sind.

Im einfachsten Fall wird nur bewertet, ob bestimmte frühere Positionen des Kraftfahrzeugs überhaupt im Anzeigeausschnitt bzw. Umgebungsausschnitt enthalten sind. Der Anzeigeausschnitt bzw. Umgebungsausschnitt kann dann beispielsweise in den meisten Fällen eindeutig festgelegt werden anhand der Maßgabe, dass ein möglichst kleiner Zoomfaktor zu wählen ist und die Blickrichtung so zu wählen ist, dass die extremsten darzustellenden früheren Positionen gerade im Randbereich des Anzeigeausschnitts bzw. Umgebungsausschnitts liegen.

Alternativ oder zusätzlich zur Bewertung, ob frühere Positionen im Anzeigeausschnitt bzw. Umgebungsausschnitt enthalten sind, kann auch eine Bewertung dahingehend erfolgen, wo die früheren Positionen im Anzeigeausschnitt bzw. Umgebungsausschnitt enthalten sind. Dabei kann gegebenenfalls sogar in Kauf genommen werden, dass eine an sich darzustellende frühere Position nicht im Anzeigeausschnitt bzw. Umgebungsausschnitt enthalten ist, wenn andere frühere Positionen umso besser dargestellt werden.

Sofern der Anzeigeausschnitt bzw. Umgebungsausschnitt, dem ein Maximum bzw. ein zufrieden stellender Wert des Gütemaßes zukommt, direkt bestimmbar ist, wird der Anzeigeausschnitt bzw. Umgebungsausschnitt vorzugsweise direkt entsprechend festgelegt. Ansonsten kann der Anzeigeausschnitt gegebenenfalls durch ein Suchschrittverfahren oder ein anderes Optimierungsverfahren festlegbar sein.

Im Folgenden wird der Einfachheit halber ohne Beschränkung der Allgemeinheit nicht länger zwischen Anzeigeausschnitt und Umgebungsausschnitt unterschieden. Jedoch ist auch für die nachfolgenden Ausführungen der Fall als offenbart anzusehen, dass ein Soll-Umgebungsausschnitt zwar in bestimmter Art und Weise festgelegt ist, der tatsächlich effektiv eingestellte Umgebungsausschnitt diesem jedoch nicht zu jeder Zeit exakt entspricht.

Vorzugsweise erfolgt die Anpassung des Umgebungsausschnitts neben der Abhängigkeit von der zumindest einen früheren Position des Kraftfahrzeugs auch in Abhängigkeit von der Fahrgeschwindigkeit des Kraftfahrzeugs. Insbesondere kann ein weitwinkliger Umgebungsausschnitt bei geringer Fahrgeschwindigkeit, z.B. bei Einparkmanövern, für einen verbesserten Überblick sorgen. Bei höherer Fahrgeschwindigkeit hingegen kann ein schmalwinklig fokussierter Umgebungsausschnitt für einen verbesserten Einblick in weiter entfernte Umgebungsteile hilfreich sein.

Vorteilhaft kann es sein, wenn die Anpassung des Umgebungsausschnitts neben der Abhängigkeit von der zumindest einen früheren Position des Kraftfahrzeugs zudem in Abhängigkeit von zumindest einer zukünftigen Position des Kraftfahrzeugs erfolgt.

Insbesondere kann der bevorzugte Anzeigeausschnitt festgelegt werden in Abhängigkeit von einer prädizierten Position und ggf. einer prädizierten räumlichen Ausrichtung des Kraftfahrzeugs. Die Prädiktion kann eine vorgegebene Zeitspanne oder einen vorgegebenen Fahrweg des Kraftfahrzeugs vorausreichen. Sie kann beispielsweise anhand der aktuellen Fahrgeschwindigkeit und/oder des aktuellen Lenkwinkels erfolgen. Auch Längs- und Querbeschleunigungswerte können zur verbesserten Prädiktion berücksichtigt werden.

Gemäß einer besonders bevorzugten Ausführungsform der vorliegenden Erfindung umfasst das Kraftfahrzeug Mittel zur Bestimmung einer Vielzahl früherer Lenkwinkelwerte des Kraftfahrzeugs und die Anzeigesteuerungseinheit legt zumindest in Abhängigkeit von der Vielzahl früherer Lenkwinkelwerte einen bevorzugten Umgebungsausschnitt fest. Die Lenkwinkelwerte können insbesondere als wesentliche oder gar alleinige Basis für die Bestimmung früherer Positionen des Kraftfahrzeugs dienen, anhand derer dann der Umgebungsausschnitt festlegbar ist. Die zurückliegenden Lenkwinkelwerte erlauben zumindest eine näherungsweise Bestimmung der zurückliegenden Fahrspur des Kraftfahrzeugs bezogen auf seine aktuelle Position. Die messtechnischen Einrichtungen und Algorithmen zur Umsetzung der Erfindung können durch eine Abstützung auf Lenkwinkelwerte besonders einfach gestaltet werden und die Erfindung dennoch wirkungsvoll umsetzen.

Gemäß einer anderen besonders bevorzugten Ausführungsform der vorliegenden Erfindung wird die zumindest eine frühere Position unter anderem anhand elektronischer Kartendaten bestimmt. Insbesondere kann eine ganze zurückliegende Trajektorie des Kraftfahrzeugs oder Teile einer solchen bestimmt werden anhand eines aus einer elektronischen Straßenkarte bekannten Straßenverlaufs. Es ist auch denkbar, Ergänzungen oder Korrekturen einer Trajektorie anhand eines aus einer elektronischen Straßenkarte bekannten Straßenverlaufs vorzunehmen, wenn die ansonsten auf andere Art und Weise gewonnene Trajektorie aufgrund von Messfehlern unterbrochen ist oder nicht plausibel erscheint.

Vorzugsweise ist der Umgebungsausschnitt neben der Abhängigkeit von der zumindest einen früheren Position des Kraftfahrzeugs selbsttätig in Abhängigkeit von weiteren Zustandsgrößen der Fahrzeugumgebung situativ anpassbar.

Denkbar ist beispielsweise eine Anpassung des Umgebungsausschnitts in Abhängigkeit von bekannten Gefahrenquellen oder anderen Verkehrsteilnehmern. Auch das hierzu erforderliche Vorwissen über Gefahrenquellen kann einer elektronischen Straßenkarte entstammen. Es kann auch drahtlos von einem Service-Anbieter bezogen werden. Die Anwesenheit und ggf. die genaue Position und/oder weitere Daten anderer Verkehrsteilnehmer können dem Kraftfahrzeug beispielsweise mittels Fahrzeug-zu-Fahrzeug-Kommunikation und/oder Fahrzeug-zu-Infrastruktur-Kommunikation bekannt gemacht werden.

Wenn ein anderer Verkehrsteilnehmer, insbesondere ein anderes Fahrzeug, mit einem RFID-Chip oder anderen sensierbaren Merkmalen ausgerüstet ist, kann dieser Verkehrsteilnehmer auch auf Basis einer Erkennung dieses Chips von dem Kraftfahrzeug oder einer Infrastruktur-Einrichtung detektiert und lokalisiert werden. Die Ausrichtung der Aufnahmemittel und/oder der Bildausschnitt können dann situativ, beispielsweise abhängig von einem Gefährdungspotenzial, das dem anderen Verkehrsteilnehmer beigemessen wird, derart angepasst werden, dass der dargestellte Umgebungsausschnitt den anderen Verkehrsteilnehmer umfasst.

Neben anderen Verkehrsteilnehmern können auch andere Objekte und Zustände der Fahrzeugumgebung im Vorbeifahren auf RFID-Basis detektiert werden. Denkbar ist beispielsweise die RFID-basierte Detektion und ggf. Lokalisierung von Verkehrszeichen, Kreuzungen, Abzweigungen, Einmündungen, Ampeln und Parkgelegenheiten. Auch in Abhängigkeit von solchen Objekten und deren Anordnung bezüglich des Kraftfahrzeugs kann der Umgebungsausschnitt situativ angepasst werden.

Die RFID-Detektion kann auch Objekte betreffen, die nicht unmittelbar das Fahrgeschehen betreffen, z.B. Briefkästen, Restaurants, Zigarettenautomaten, etc. Der Umgebungsausschnitt kann situativ auch derart angepasst werden, dass solche Objekte dem Fahrer angezeigt werden. Dem Fahrer kann so beispielsweise ein freier Parkplatz in der Fahrzeugumgebung bildlich dargestellt werden.

Zusätzlich zu der RFID-induzierten Anpassung des dargestellten Umgebungsausschnitts kann auch zumindest eine aus dem jeweiligen RFID-Chip ausgelesene Information betreffend das mit dem RFID-Chip ausgerüstete Objekt durch die erfindungsgemäß vorgesehene Anzeigeeinheit angezeigt werden. Statt der Anzeige der Information durch die Anzeigeeinheit kann selbstverständlich auch die Anzeige der Information durch eine andere Informationsvermittlungseinheit veranlasst werden. Der Bildausschnitt kann beispielsweise, wie oben erwähnt, derart angepasst werden, dass dem Fahrer im dargestellten Umgebungsausschnitt ein freier Parkplatz gezeigt wird. Zudem kann - eingeblendet in das Bild des Umgebungsausschnitts oder an anderer Stelle im Fahrzeuginneren - als weitere Information aus dem RFID-Chip ausgelesen werden und dem Fahrer angezeigt werden, welche Parkgebühren für eine Benutzung des Parkplatzes anfallen würden.

Die im vorhergehenden Abschnitt angesprochene situative Festlegung kann mit der weiter oben angesprochenen Festlegung des Umgebungsausschnitts konkurrieren, die eine Ausrichtung auf frühere Fahrzeugpositionen vorsieht. Vorzugsweise ist daher eine Gewichtung unterschiedlicher Einflussgrößen bei der Festlegung des Umgebungsausschnitts durch Bedienhandlungen eines Fahrzeuginsassen anpassbar. Insbesondere kann es beispielsweise vorteilhaft sein, eine Schwelle zu definieren, die ein mathematisches Maß der Relevanz einer Verkehrssituation überschreiten muss, damit eine Festlegung des Umgebungsausschnitts in Abhängigkeit von dieser Verkehrssituation erfolgt. Wird die Schwelle nicht überschritten, wird der Umgebungsausschnitt wie gehabt in Abhängigkeit von zumindest einer früheren Position des Kraftfahrzeugs angepasst.

Gemäß einer anderen vorteilhaften Weiterbildung der vorliegenden Erfindung ist eine durch eine Nick- oder Rollbewegung des Kraftfahrzeugs verursachte Veränderung des Umgebungsausschnitts durch eine gegenläufige Anpassung des Bildausschnitts kompensierbar. Beispielsweise wird eine dargestellte Rückraumansicht somit nicht durch ein Nicken des Fahrzeugs bei einer starken Bremsung verfälscht. Hilfreich für eine Umsetzung ist eine Messung oder Abschätzung der zu kompensierenden Störgrößen.

Auch der makroskopische Verlauf der von dem Kraftfahrzeug befahrenen Straße kann kompensiert werden. Damit beispielsweise ein hinter dem Kraftfahrzeug fahrendes anderes Fahrzeug im Umgebungsausschnitt enthalten sein kann, reicht es nicht aus, die Nick- und Rollbewegungen der Kraftfahrzeugs gegenüber einer als eine einzige ebene Fläche approximierten Straßenoberfläche zu kompensieren. Fährt das Kraftfahrzeug beispielsweise zunächst auf im Wesentlichen ebener Straße und ist dann plötzlich kurzzeitig stark nach hinten geneigt, während es eine lokal eng begrenzte Steigung hinauffährt, so muss zum einen die Neigung des Kraftfahrzeugs gegenüber der lokalen Straßenoberfläche kompensiert werden, zum anderen die Neigung und Höhe dieser lokalen Straßenoberfläche gegenüber der Ebene, in der sich das nachfolgende Fahrzeug noch befindet. Solche Daten können bekannt sein aus elektronischen Kartendaten eines Navigationssystems. Alternativ kann, sofern das Kraftfahrzeug über hierzu geeignete Erfassungsmittel verfügt, auch die absolute Höhe und der absolute Nickwinkel des Kraftfahrzeugs im Raum bestimmt werden. Wenn zudem die frühere Position, auf die der Umgebungsausschnitt anzupassen ist, absolut im Raum bekannt ist, können die Aufnahmemittel und/oder der Bildausschnitt entsprechend angepasst werden.

Gemäß einer anderen vorteilhaften Weiterbildung der vorliegenden Erfindung ist eine durch eine Vibration des Kraftfahrzeugs verursachte Veränderung des Umgebungsausschnitts durch eine gegenläufige Anpassung des Bildausschnitts kompensierbar. Der Bildstrom einer Rückraumansicht kann somit beispielsweise während einer Fahrt über Kopfsteinpflaster, die das gesamte Fahrzeug und somit auch die Aufnahmemittel vibrieren lässt, elektronisch stabilisiert werden. Hilfreich für eine Umsetzung ist eine Messung oder Abschätzung der zu kompensierenden Störgrößen.

Gemäß einer anderen vorteilhaften Weiterbildung der vorliegenden Erfindung ist der Bildausschnitt zumindest zeitweise in zumindest einem Randbereich gegenüber einem mittleren Bildbereich gestaucht, um eine Darstellung des Umgebungsausschnitts zu bewirken, welcher der Darstellung durch einen asphärischen Spiegel entspricht. So kann der gesamte Blickwinkel vergrößert werden, ohne das Bild im mittleren Bildbereich zu verkleinern oder zu verzerren.

Gemäß einer anderen vorteilhaften Weiterbildung der vorliegenden Erfindung umfasst die Vorrichtung Mittel zur Bestimmung einer Augenposition und/oder Blickrichtung des Bedieners und der Umgebungsausschnitt ist in Abhängigkeit von dieser Augenposition und/oder Blickrichtung anpassbar. So kann insbesondere dem Fahrer die Möglichkeit gegeben werden, mit der Vorrichtung in derselben Art und Weise zu interagieren, wie er dies von einem konventionellen Spiegel gewohnt ist. Beispielsweise kann zu einer weitwinkligeren Darstellung übergegangen werden, wenn der Fahrer seine Augen der Anzeigeeinheit annähert. Gegebenenfalls kann dieser Effekt auch überproportional verstärkt werden. Dadurch wird dem Fahrer sogar eine gegenüber der Verwendung eines konventionellen Spiegels verbesserte bzw. erweiterte Möglichkeit gegeben, mit der Vorrichtung zu interagieren. Dennoch ist diese Funktion der Vorrichtung wegen der Gleichartigkeit der Interaktionsmöglichkeiten für die meisten Fahrer intuitiv und ohne nennenswerte Eingewöhnungsphase zielgerichtet benutzbar. Es kann aber auch vorteilhaft sein, den Zoomfaktor zu erhöhen, wenn der Fahrer seine Augen der Anzeigeeinheit annähert. Auch dies kann der Erwartungshaltung mancher Nutzer entsprechen und ist für solche Nutzer somit intuitiv und ohne nennenswerte Eingewöhnungsphase zielgerichtet benutzbar. Statt der Augenposition kann auch die Kopfposition des Benutzers, insbesondere des Fahrers, erfasst werden, wenn dies technisch einfacher realisierbar ist.

Gemäß einer anderen vorteilhaften Weiterbildung der vorliegenden Erfindung umfasst die Vorrichtung Mittel zur Ausleuchtung der Fahrzeugumgebung und die Ausleuchtung der Fahrzeugumgebung wird in Abhängigkeit von dem aktuell dargestellten Umgebungsausschnitt gesteuert. So kann, insbesondere mittels gerichteter Lichtquellen und deren Ausrichtung auf den Umgebungsausschnitt, stets zielgerichtet der Teil der Fahrzeugumgebung ausgeleuchtet werden, der sich in der Anzeige an den Fahrer auch tatsächlich wiederfindet. Selbstverständlich kann dieses Ziel auch erreicht werden, wenn die Ausleuchtung der Fahrzeugumgebung in Abhängigkeit von der zumindest einen früheren Position des Kraftfahrzeugs derart gesteuert wird, dass der aktuell dargestellte Umgebungsausschnitt in bestimmter Art und Weise, beispielsweise möglichst hell, ausgeleuchtet wird.

Für die Ausleuchtung können gegebenenfalls auch die ohnehin vorgesehenen Scheinwerfer (insbesondere Abblendlicht, Fernlicht und/oder Rückfahrlicht) des Kraftfahrzeugs verwendet werden, sofern deren Licht ausrichtbar und/oder umverteilbar ist. Insbesondere in diesem Falle und in anderen Fällen der Verwendung sichtbaren Lichts kann die Veränderung der Ausleuchtung der Fahrzeugumgebung dazu beitragen, dass sowohl der Umgebungsausschnitt verbessert erfindungsgemäß dargestellt werden kann, als auch der Fahrer und andere Verkehrsteilnehmer diesen unmittelbar besser einsehen können.

Die Ausleuchtung der Umgebung kann auch im Infrarotspektrum ausgestaltet sein, wenn die erfindungsgemäß verwendeten Aufnahmemittel im Infrarotspektrum arbeiten. In diesem Fall werden andere Verkehrsteilnehmer nicht von der veränderten Ausleuchtung der Umgebung irritiert.

Der erfinderische Gedanke ist grundsätzlich auf alle Vorrichtungen zum Überwachen der Umgebung eines Kraftfahrzeugs anwendbar, die dem Fahrer einen Ausschnitt der Fahrzeugumgebung bildlich darstellen und technisch zur Umsetzung der Merkmale der Erfindung geeignet sind. Vorrichtungen, die einen dem Fahrer darstellbaren bildlichen Ausschnitt der Fahrzeugumgebung bereitzustellen vermögen, lassen sich subsumieren unter dem Begriff "bildgebende Vorrichtungen". Zu den bildgebenden Vorrichtungen in diesem Sinne zählen sowohl solche, die auf Kamerabildern (auch Infrarot) basieren, als auch solche, die auf synthetischen Bildern (gegebenenfalls auch mit einer symbolhaft dargestellten Fahrzeugumgebung) basieren und die beispielsweise durch ein Abtasten bzw. "Scannen" der Umgebung durch eine Radar-Vorrichtung, eine Lidar-Vorrichtung oder ein ähnliches Erfassungsmittel erzeugt werden. Ein Objekt in der Umgebung eines Kraftfahrzeugs kann auch erkannt werden, weil es über einen RFID-Chip oder ein ähnliches detektierbares Merkmal verfügt. Ein solches RFID-basiert erkanntes Objekt könnte beispielsweise in ein ansonsten künstlich auf Radar-Basis erzeugtes Umgebungsbild eingezeichnet werden. Auch solche Fälle einer realzeitmäßigen Bilderzeugung auf Basis einer Sensierung der Umgebung seien vom verwendeten Begriff der "Aufnahme eines Bildstroms durch Aufnahmemittel" umfasst. Eine bildgebende Vorrichtung im obigen Sinne kann auch aus mehreren Kameras und/oder anderen Sensoren bestehen, deren Bild zu einem einzigen Bild zusammengefügt wird.

Die Anzeigesteuerungseinheit kann beispielsweise als KFZ-Steuergerät ausgebildet sein. Sie kann bei vorteilhafter Ausführung neben den genannten Aufgaben auch weitere Aufgaben erledigen, die im Zusammenhang mit der Erfindung stehen und/oder die nicht im Zusammenhang mit der Erfindung stehen.

Im Folgenden werden anhand der beigefügten Zeichnungen bevorzugte Ausführungsbeispiele der Erfindung beschrieben. Daraus ergeben sich weitere Details, bevorzugte Ausführungsformen und Weiterbildungen der Erfindung. Die geschilderten Ausführungsbeispiele, Ausführungsformen und Weiterbildungen sind, sofern nicht anders angegeben und/oder technisch ausgeschlossen, sowohl einzeln als auch in jeder beliebigen Kombination miteinander anwendbar und vorteilhaft. Einige Ausführungsbeispiele - insbesondere diejenigen, die sich auf eine Festlegung des Umgebungsausschnitts beziehen - sind auch unabhängig von der Erfindung anwendbar. Im Einzelnen zeigen
- Fig. 1: eine erste Verkehrssituation, in welcher eine konventionelle Spiegel-Vorrichtung keine ausreichende Überwachung der Fahrzeugumgebung erlaubt,
- Fig. 2: eine zweite Verkehrssituation, in welcher eine konventionelle Spiegel-Vorrichtung keine ausreichende Überwachung der Fahrzeugumgebung erlaubt,
- Fig. 3: eine Sequenz mehrerer Momentaufnahmen während eines Überholvorgangs eines Kraftfahrzeugs, das mit einer Anzeigesteuerungseinheit ausgerüstet ist,
- Fig. 4: eine der Verkehrssituation aus Fig. 1 entsprechende Verkehrssituation unter Anwendung einer intelligenten Anzeigesteuerung,
- Fig. 5: eine der Verkehrssituation aus Fig. 2 entsprechende Verkehrssituation unter Anwendung einer intelligenten Anzeigesteuerung,
- Fig. 6: eine dritte Verkehrssituation unter Anwendung einer intelligenten Anzeigesteuerung,
- Fig. 7: eine graphische Anzeige einer Bedienschnittstelle zur Parametrierung einer Anzeigesteuerungseinheit,
- Fig. 8: eine mögliche Ausführungsform eines Innenspiegels mit der Möglichkeit zur Anzeige einer bildlichen Darstellung, die auf die Lage des aktuell dargestellten Umgebungsausschnitts relativ zum Kraftfahrzeug hinweist,
- Fig. 9: eine mögliche Ausführungsform eines Innenspiegels mit der Möglichkeit zur Anzeige einer solchen bildlichen Darstellung und eines Umgebungsausschnitts,
- Fig. 10: eine mögliche Ausführungsform eines Innenspiegels mit der Möglichkeit zur Anzeige eines Umgebungsausschnitts an einer Stelle der Spiegelfläche, die der Lage des Umgebungsausschnitts bezüglich des Kraftfahrzeugs entspricht,
- Fig. 11: eine mögliche Ausführungsform einer Anzeige mit entsprechend der Lage des Umgebungsausschnitts bezüglich des Kraftfahrzeugs transformiertem Bildausschnitt,
- Fig. 12: eine erste mögliche Abbildungsfunktion für eine Stauchung im Randbereich des Bildausschnitts und
- Fig. 13: eine zweite mögliche Abbildungsfunktion für eine Stauchung im Randbereich des Bildausschnitts.

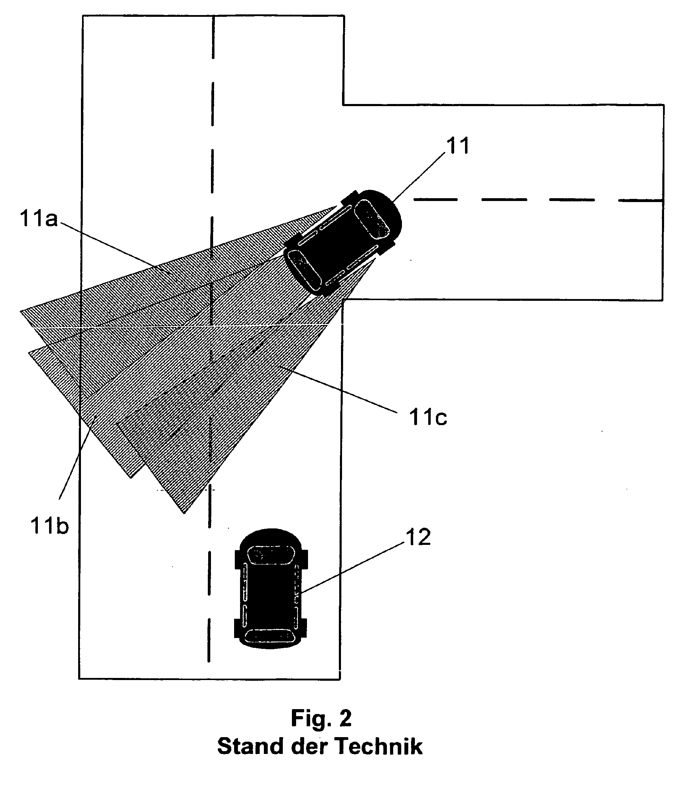

Konventionelle Rückspiegel eines Kraftfahrzeugs ermöglichen eine gute Sicht auf einen bestimmten Ausschnitt der Fahrzeugumgebung, der durch einen konstanten Öffnungswinkel und eine (durch Verstellen des Spiegels) einstellbare Richtung relativ zum Kraftfahrzeug festgelegt ist. Fig. 2 zeigt die typischen "Sichtwinkelausschnitte" 11a, 11b, 11c, welche dem Fahrer eines Kraftfahrzeugs 11 durch konventionelle Rückspiegel zur Verfügung gestellt werden.

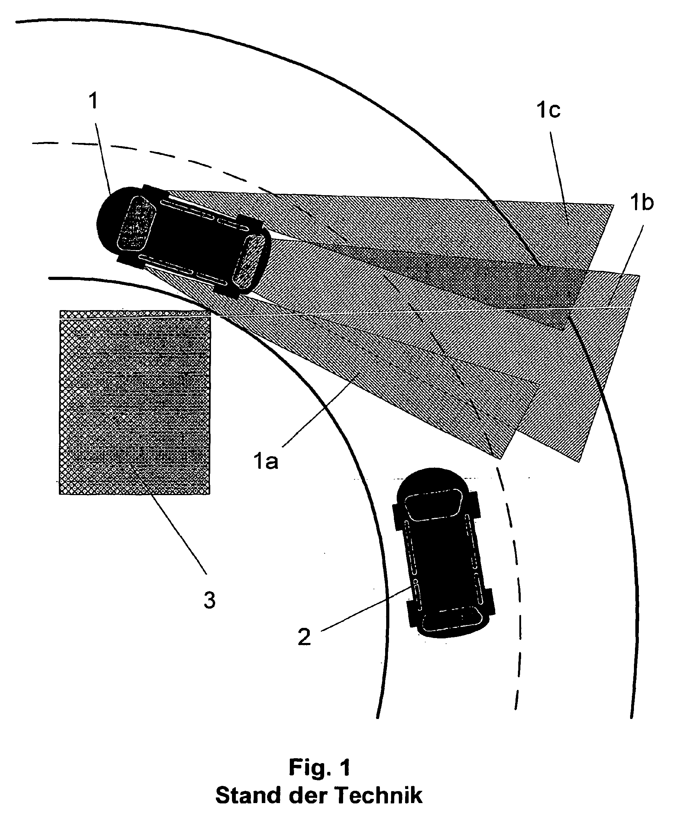

Der typische Einbauort der Spiegel im vorderen Bereich des Kraftfahrzeugs erlaubt es allerdings nicht, Objekte, insbesondere andere Kraftfahrzeuge, die sich in Bezug auf die Verbauposition der Spiegel hinter einer Kurve befinden, zu sehen. Beispielsweise ist dem Fahrer eines Fahrzeugs 1 in Fig. 1 durch das Hindernis 3 die Sicht auf ein nachfolgendes Fahrzeug 2 verdeckt. Zwar stehen dem Fahrer die Sichtwinkelausschnitte 1 b und 1 c voll zur Verfügung. Der "Sichtwinkelausschnitt" 1a jedoch wird durch das Hindernis 3 beschnitten. Dieser Umstand erhöht das Unfallrisiko in Kurven, beim Ausfahren aus Parkplätzen (besonders aus einer Querparklücke) und in weiteren ähnlichen Situationen. Auch in anderen Situationen, insbesondere beim spitzwinkligen Abbiegen, z.B. an einer Kreuzung, und bei Wendemanövern ist der in den Spiegeln sichtbare Ausschnitt der Fahrzeugumgebung für den Fahrer hinsichtlich seiner Richtung nur von begrenztem Nutzen. Beispielsweise sieht auch der Fahrer des Fahrzeugs 11 in Fig. 2 das nachfolgende Fahrzeug 12 nicht, da sich die Sichtwinkelausschnitte 11a, 11b, 11c seiner Rückspiegel beim Abbiegen mit dem Fahrzeug 11 im Raum verdrehen.

Zur Behebung solcher Probleme ist es bekannt, bildgebende Einrichtungen, insbesondere Kameras, zu verwenden und Bilder der Fahrzeugumgebung, die mit solchen Einrichtungen erfasst werden, zumindest ausschnittsweise im Fahrzeuginneren darzustellen.

Um einen großen potenziell relevanten Bereich der Fahrzeugumgebung abzudecken, sind die aus dem Stand der Technik bekannten bildgebenden Einrichtungen in der Regel sehr weitwinklig dimensioniert. Eine weitwinklige bildgebende Einrichtung mit großem Öffnungswinkel zur Abdeckung eines großen potenziell relevanten Bereichs der Fahrzeugumgebung hat aber auch erhebliche Nachteile. Zum einen erschwert ein unmittelbar wiedergegebenes weitwinkliges Bild die Orientierung durch eine unnatürliche Perspektive und erfordert eine große Bildschirmfläche, damit Objekte in ausreichender Größe dargestellt werden, um auch Details erkennbar zu machen. Zum anderen kann oft der Abstand des Fahrzeugs zu anderen Objekten, insbesondere zu beweglichen Objekten, anhand eines weitwinkligen Bildes nicht richtig eingeschätzt werden. Zunächst weit entfernte, sich annähernde Objekte werden im Verlaufe einer Annäherung noch lange sehr klein dargestellt und vergrößern sich später für den Fahrer überraschend schnell. Zudem verschwimmen bei schneller Fahrt und weitwinkliger Darstellung oftmals die Randbereiche einer im Bild dargestellten Straße.

Unter anderem aufgrund der Tatsachen, dass die im Fahrzeuginneren verfügbaren und vorsehbaren Anzeigeflächen typischerweise sehr knapp bemessen sind und dass die Anzahl der eine Bildwiedergabe an den Fahrer erfordernden Fahrerassistenzfunktionen stets zunimmt, wurde bereits vorgeschlagen, nur einen Bildausschnitts eines Bildstroms, der Bilder zumindest eines Teils der Umgebung des Kraftfahrzeugs beinhaltet, durch eine Anzeigeeinheit im Fahrzeuginneren darzustellen. Bekannt ist ferner der Ansatz, Mittel zur selbsttätigen Veränderung des durch die Anzeigeeinheit dargestellten Umgebungsausschnitts vorzusehen.

Nur unzureichend gelöst ist hingegen bisher die Frage der optimalen Festlegung des durch die Anzeigeeinheit dargestellten Umgebungsausschnitts. Zur Lösung dieser Frage wird ein Verfahren der eingangs genannten Gattung vorgeschlagen. Im hier geschilderten Beispiel ist das Verfahren derart ausgestaltet, dass der dargestellte Umgebungsausschnitt im Wesentlichen auf den von dem Kraftfahrzeug zuletzt befahrenen Fahrbahnabschnitt ausgerichtet ist. Somit besitzt diese Vorrichtung genau die Fähigkeit, die einem konventionellen Rückspiegel in bestimmten bereits geschilderten Situationen (z.B. beim spitzwinkligen Abbiegen) fehlt. Die Verkehrssicherheit und der Komfort des Fahrers des Kraftfahrzeugs werden erhöht, da der Fahrer ein nachfolgendes Fahrzeug auch in solchen Situationen im Blick behalten kann.

Im Folgenden wird zunächst auf die dem vorliegenden Beispiel und anderen Ausführungsbeispielen zugrunde liegende Anzeigesteuerung eingegangen.

Im Rahmen der Anzeigesteuerung wird die bildgebende Einrichtung für die Festlegung des nicht etwa mechanisch ausgerichtet, sondern es wird alleine auf der Ebene der auf die eigentliche Bilderfassung folgenden Signalverarbeitung adaptiv ein Ausschnitt aus einem weitwinklig erfassten Bild bzw. Bildstrom extrahiert. Es findet gewissermaßen ein rein virtueller Kameraschwenk statt, wenn der gewählte Bildausschnitt im weitwinklig erfassten Bild bzw. Bildstrom verschoben wird. Gegebenenfalls findet zudem ein virtueller bzw. digitaler Zoom statt, wenn der gewählte Bildausschnitt im weitwinklig erfassten Bild bzw. Bildstrom größer oder kleiner gewählt wird. Das weitwinklige Bild und auch der extrahierte Bildausschnitt können dabei je nach Ausführungsform der verwendeten Vorrichtung auch zustande kommen, indem die Bilder mehrerer bildgebender Einrichtungen untereinander umgeschaltet oder gemischt werden.

Die im vorliegenden Ausführungsbeispiel beschriebene Vorrichtung ist derart ausgestaltet, dass die Auswahl des dargestellten Sichtfeldes der bildgebenden Einrichtung, d.h. des Bildausschnitts, abhängig von den Fahrzeugkoordinaten zu zumindest einem früheren Zeitpunkt erfolgt. Dies ist insbesondere dann von großem Vorteil, wenn das Fahrzeug ein komplexes Fahrmanöver durchführt. Fährt das Kraftfahrzeug beispielsweise aufgrund eines plötzlichen Ausweichmanövers slalomartige Kurven, so würde sich dem Fahrer in einem konventionellen Rückspiegel des Kraftfahrzeugs eine sehr unruhige Umgebungsansicht bieten, die stark "hin und her wandert". Ein Versuch des Fahrers, sich in einer solchen Situation anhand des Bildes im Rückspiegel zu orientieren, könnte sogar zur Desorientierung des Fahrers beitragen. Stattdessen wird der durch die Anzeigeeinheit im vorliegenden Beispiel darzustellende Umgebungsausschnitt derart festgelegt, dass mehrere (im vorliegenden Beispiel genau vier) exakt definierte ehemalige Fahrzeugpositionen im dargestellten Bild enthalten sind. Beispielsweise können dies die Fahrzeugpositionen sein, die auf der Trajektorie des Fahrzeugs 5 Meter, 10 Meter, 15 Meter und 20 Meter echter Fahrstrecke gegenüber der aktuellen Position zurückliegen. Zur Bestimmung dieser Fahrzeugpositionen, die im dargestellten Umgebungsausschnitt enthalten sein sollen/müssen, kann die aktuelle Fahrzeugposition laufend durch eine satellitengestütztes System zur Positionsbestimmung (GPS, Galileo, etc.) ermittelt werden und die Positionswerte zumindest der letzten 20 Meter Fahrstrecke werden in einem Kurzzeitspeicher vorgehalten. Zur Erfassung der gefahrenen Fahrstrecke können insbesondere die Radsensoren des Fahrzeugs dienen.

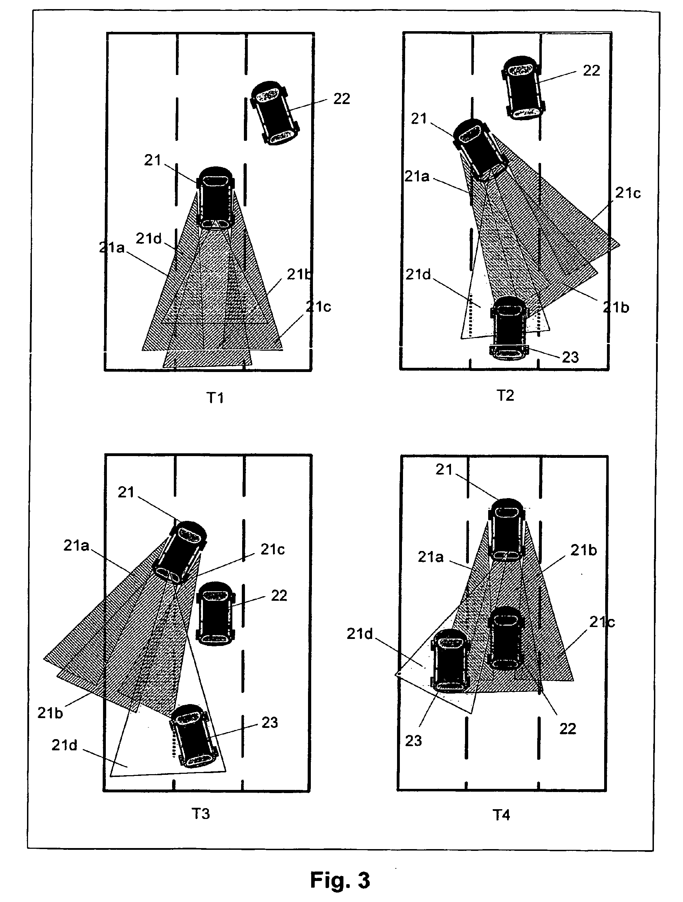

Fig. 3 veranschaulicht anhand einer Sequenz von Momentaufnahmen zu den Zeitpunkten T1, T2, T3 und T4, dass ein Kraftfahrzeug 21, das einem überraschend die Fahrspur wechselnden Fahrzeug 22 ausweicht, während dieses Ausweichmanövers auf diese Weise ein nachfolgendes Fahrzeug 23 im Blick behalten kann (Sichtwinkelausschnitt 21d). Mit konventionellen Rückspiegeln hingegen (Sichtwinkelausschnitte 21 a, 21 b, 21 c) würde das nachfolgende Fahrzeug 23 aus dem Blick des Fahrers verschwinden. Insbesondere zu den Zeitpunkten T2, T3 und T4 weicht der anhand der ehemaligen Fahrzeugpositionen festgelegte Sichtwinkelausschnitt 21d insbesondere hinsichtlich seiner Ausrichtung bezüglich des Fahrzeugs deutlich von den Sichtwinkelausschnitten 21 a, 21 b, 21 c der konventionellen Rückspiegel ab.

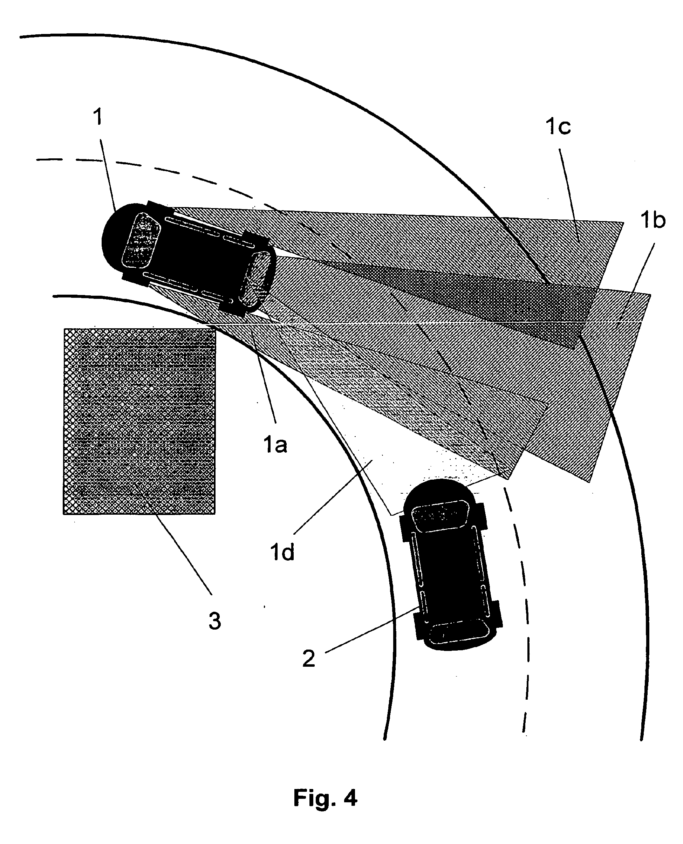

Fig. 4 zeigt die Verkehrssituation aus Fig. 1 nunmehr unter zusätzlicher Verwendung einer solchen Vorrichtung. Der durch die Vorrichtung angepasste Sichtwinkelausschnitt 1d erlaubt es dem Fahrer des Kraftfahrzeugs 1, das nachfolgende Fahrzeug 2 im Blick zu behalten.

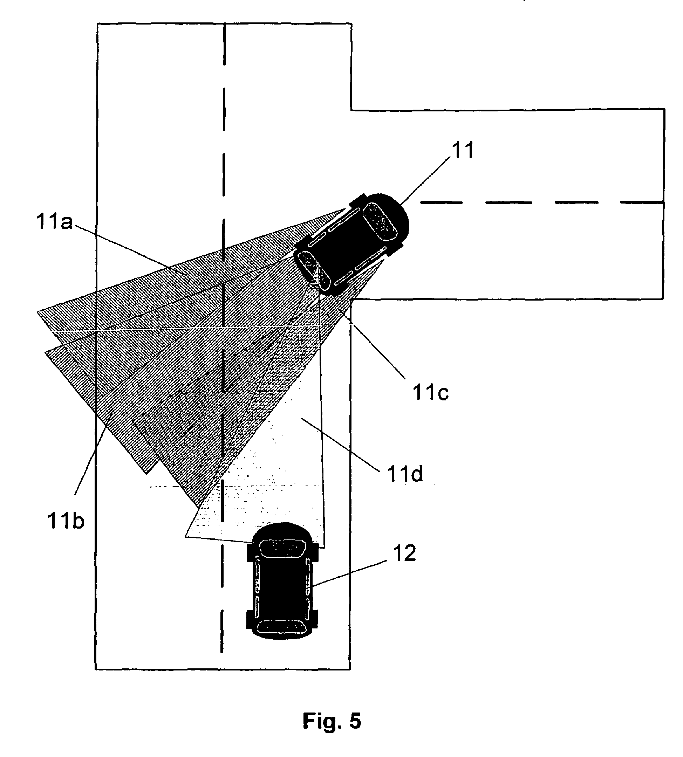

Fig. 5 zeigt die Verkehrssituation aus Fig. 2 nunmehr unter zusätzlicher Verwendung einer solchen Vorrichtung. Der durch die Vorrichtung angepasste Sichtwinkelausschnitt 11d erlaubt es dem Fahrer des Kraftfahrzeugs 11, das nachfolgende Fahrzeug 12 im Blick zu behalten.

Die im vorliegenden Ausführungsbeispiel beschriebene Vorrichtung ist derart ausgestaltet, dass der dargestellte Umgebungsausschnitt insbesondere anhand der Richtungswinkel zwischen der Fahrzeuglängsachse (verwendbar wäre ansonsten auch jede andere fahrzeugfeste Bezugsachse) und den früheren Fahrzeugpositionen festgelegt wird.

Hierzu umfasst das Kraftfahrzeug im vorliegenden Ausführungsbeispiel Mittel zur Bestimmung der Ausrichtung des Fahrzeuges. Diese Ausrichtung wird vorzugsweise ebenso wie die Fahrzeugposition laufend bestimmt und in einem Kurzzeitspeicher abgelegt - vorzugsweise demselben Kurzzeitspeicher, in dem auch die Positionswerte abgelegt werden. Besonders günstig ist es, die Ausrichtungswerte bereits bei der Ablage im Kurzzeitspeicher den jeweiligen Positionswerten zuzuordnen. Ansonsten kann die Zuordnung aber auch nachträglich erfolgen, beispielsweise anhand gleicher oder ähnlicher Zeitstempel.

Die Festlegung anhand der Richtungswerte erfolgt vorliegend mittels einer Interpolationsformel zwischen den Winkelwerten der einzelnen früheren Fahrzeugpositionen. Dabei werden die jeweils neuesten Werte höher gewichtet als die jeweils älteren, die aber dennoch berücksichtigt werden.

Bei einem anderen, hier nicht näher besprochenen Ausführungsbeispiel für ein Verfahren zur Anzeigesteuerung kann statt einer starren Festlegung der früheren Fahrzeugpositionen als diejenigen Positionen, die auf der Trajektorie des Fahrzeugs 5 Meter, 10 Meter, 15 Meter und 20 Meter echter Fahrstrecke gegenüber der aktuellen Position zurückliegen, der berücksichtigte Teil der zurückliegenden Trajektorie abhängig von der aktuellen Geschwindigkeit des Fahrzeuges definiert werden. Die Betrachtung kann dann bei schnellerer Fahrt beispielsweise bis zu 50 Meter zurückreichen, während bei langsamerer Fahrt nur die letzten 10 gefahrenen Meter berücksichtigt werden.

Der Öffnungswinkel wird im vorliegenden Ausführungsbeispiel grundsätzlich nur so groß gewählt, dass sich alle berücksichtigten früheren Fahrzeugpositionen im Umgebungsausschnitt darstellen lassen. Er wird also grundsätzlich so gering wie möglich gehalten. In Ausnahmefällen kann aber zur Berücksichtigung weiterer anzeigenswerter Umgebungsbereiche ein weiterer Öffnungswinkel gewählt werden. Für den Fall, dass die berücksichtigten früheren Fahrzeugpositionen im Wesentlichen auf einer Geraden liegen, z. B. bei einer Geradeausfahrt, ist im vorliegenden Ausführungsbeispiel außerdem eine Untergrenze von z. B. 15 Grad für den Öffnungswinkel vorgesehen.

Ebenso kann eine Obergrenze festgelegt sein, die verhindert, dass Details der Umgebung zu klein dargestellt werden. Es werden dann unter Umständen nicht alle berücksichtigten früheren Fahrzeugpositionen tatsächlich dargestellt, jedoch wird der Umgebungsausschnitt so festgelegt, dass die berücksichtigten früheren Fahrzeugpositionen "möglichst gut" abgedeckt werden.

Auch der Öffnungswinkel wird bei einem anderen, hier nicht näher besprochenen Ausführungsbeispiel für ein Verfahren zur Anzeigesteuerung nicht abrupt verändert, sondern gleitend unter Anwendung einer Interpolationsformel. Die dabei verwendete Interpolationsformel kann im Wesentlichen der oben genannten Interpolationsformel zur Berechnung des Richtungswinkels entsprechen.

Es sei angemerkt, dass zur Festlegung des Umgebungsausschnitts anhand der Richtungswinkel zu früheren Fahrzeugpositionen nicht zwingend ein Navigationssystem mit elektronischer Straßenkarte benötigt wird. Dies ermöglicht eine sehr einfache Umsetzung, die auch in weniger gut ausgestatteten Fahrzeugen praktizierbar ist. Zur Ansteuerung der Bildauswahl reicht beispielsweise im Wesentlichen auch ein reines Ortungssystem aus, das in der Regel wesentlich preisgünstiger bereitstellbar ist als ein Navigationssystem, sowie die odometrischen Daten des Kraftfahrzeugs (Geschwindigkeit, gefahrene Strecke aus Radsensoren), die in der Regel ohnehin verfügbar sind.

Wird zudem der Lenkwinkel des Fahrzeugs ausgewertet, so ist nicht einmal ein System zur absoluten Ortung erforderlich. Es kann dann vollständig anhand odometrischer Daten auf die Richtungswinkel der früheren Fahrzeugpositionen relativ zur aktuellen Fahrzeugausrichtung und auf die Distanzen der früheren Fahrzeugpositionen relativ zur aktuellen Fahrzeugposition geschlossen werden.

Bei einem anderen, hier nicht näher besprochenen Ausführungsbeispiel für ein Verfahren zur Anzeigesteuerung kann der Öffnungswinkel abhängig von der Fahrgeschwindigkeit festgelegt werden. Es wird dem Fahrer dann ein variabel ausgewählter Umgebungsausschnitt dargestellt, dessen Größe (gemeint ist die Größe des abgedeckten Bereichs der Umgebung) von der Fahrzeuggeschwindigkeit abhängt. Der optimale Öffnungswinkel für die Wahrnehmung und Interpretation der Umgebung durch den Fahrer ist bei verschiedenen Geschwindigkeiten unterschiedlich. Durch die geschwindigkeitsabhängige Festlegung kann dem Fahrer bei einer geringen Geschwindigkeit (z.B. Rangier-Geschwindigkeit) eine relativ weitwinklige Übersichts-Ansicht dargestellt werden, die das konventionelle Spiegelbild ergänzt. Bei einer hohen Geschwindigkeit hingegen (z.B. Autobahn-Geschwindigkeit) wird der Öffnungswinkel automatisch eingeschränkt. Somit erhöht sich die Vergrößerung von weit entfernten Objekten. Diese Funktion kann rein elektronisch (ohne optisches Zoom) realisiert werden.

Außerdem kann statt einer unmittelbaren Veränderung des Öffnungswinkels abhängig von der Fahrgeschwindigkeit auch lediglich eine Ober- oder Untergrenze für den Öffnungswinkel abhängig von der Fahrgeschwindigkeit variiert werden. Wie oben bereits erwähnt, ist im vorliegenden Ausführungsbeispiel eine Untergrenze für den Öffnungswinkel vorgesehen. Ebenso ist eine Obergrenze vorgesehen. Diese Obergrenze soll auch dann nicht überschritten werden, wenn nur durch einen noch größeren Öffnungswinkel alle zu berücksichtigenden früheren Fahrzeugpositionen abdeckbar wären. Greift die Begrenzung durch die Obergrenze ein, werden die früheren Fahrzeugpositionen "möglichst gut" unter Anwendung eines Gütemaßes abgedeckt. Sowohl diese Obergrenze als auch die genannte Untergrenze werden im vorliegenden Ausführungsbeispiel abhängig von der Fahrgeschwindigkeit festgelegt. Dies trägt dazu bei, zwar den in der aktuellen Verkehrssituation wichtigsten Raumwinkel darzustellen, dessen Größe (gemeint ist wieder die Größe des abgedeckten Bereichs der Umgebung) aber insbesondere wegen der typischerweise begrenzten verfügbaren Anzeigefläche nicht zu groß werden zu lassen. Durch das Vorsehen einer Obergrenze des Öffnungswinkels, die mit zunehmender Geschwindigkeit abnimmt, kann beispielsweise erreicht werden, dass bei zügiger Fahrt ein nachfolgendes Kraftfahrzeug nicht zu klein dargestellt wird. Dies gilt auch dann, wenn die zügige Fahrt auf einer kurvigen Straße stattfindet und die somit in verschiedene Richtungen verstreuten früheren Fahrzeugpositionen "eigentlich" einen größeren Öffnungswinkel erfordern würden, um abgedeckt werden zu können.

Der Öffnungswinkel kann wahlweise auch als Folge einer Bedienaktion des Fahrers verändert werden.

Bei einem anderen, hier nur kurz zu besprechenden Ausführungsbeispiel für ein Verfahren zur Anzeigesteuerung kann der ausgewählte Umgebungsausschnitt abhängig vom Lenkwinkel des Fahrzeuges zu zumindest einem Zeitpunkt dargestellt werden. Besonders vorteilhaft ist die Auswertung einer Historie des Lenkwinkels, beispielsweise über die letzten 20 gefahrenen Meter hinweg. Hieraus können, gegebenenfalls in Verbindung mit der Fahrgeschwindigkeit und Daten der Radsensoren, leicht frühere Fahrzeugpositionen relativ bezogen auf die aktuelle Fahrzeugposition bestimmt werden. Es muss aber nicht zwangsläufig eine tatsächliche explizite Bestimmung und Auswertung solcher früherer Fahrzeugpositionen erfolgen, um eine vorteilhafte Adaption des Umgebungsausschnitts zu erreichen. Selbst ein vereinfachtes System unter unmittelbarer Berücksichtigung des Lenkwinkels, beispielsweise auf Basis eines Kennfelds und gegebenenfalls in Verbindung mit der Fahrgeschwindigkeit und Daten der Radsensoren, kann bei geeignet festgelegtem Kennfeld einen der wesentlichen durch die Anzeigesteuerung bezweckten Vorteile bewirken, nämlich eine Festlegung des Umgebungsausschnitts so, dass die zuletzt befahrenen Fahrbahnbereiche eingesehen werden können.

Beispielsweise sind die in Fig. 4 und Fig. 5 dargestellten Vorteile der Anzeigesteuerung auch mit solch einfachen Mitteln, ausschließlich unter Berücksichtigung des Lenkwinkels, zu bewirken. Ist beispielsweise das Lenkrad nach links eingeschlagen, wird ein in Fahrtrichtung gesehen links rückwärtig bezüglich des Fahrzeugs gelegener Ausschnitt der Umgebung dargestellt. Bereits durch diese einfache Vorschrift wird dem Fahrer - bei geeignetem Verstärkungsfaktor zwischen Lenkwinkel und Richtungswinkel - ein Umgebungsausschnitt dargestellt, der auch bei einer Fahrt durch eine kreis- bzw. bogenförmige Kurve auf die zuletzt befahrenen Fahrbahnbereiche hinter dem Fahrzeug ausgerichtet ist. Um dies auch für komplexere, nicht kreis- bzw. bogenförmige Kurven zu erreichen, kann eine Historie der Lenkwinkelwerte aufgezeichnet und ausgewertet werden.

Bei einem anderen, hier nur am Rande besprochenen Ausführungsbeispiel für ein Verfahren zur Anzeigesteuerung wird der durch die Anzeigeeinheit dargestellte Umgebungsausschnitt abhängig von Vorwissen betreffend die Fahrzeugumgebung festgelegt. Das Vorwissen kann insbesondere Fakten und Objekte betreffen, die nicht vom Fahrzeug selbst erfassbar sind bzw. erfasst werden. Zur Festlegung können beispielsweise Informationen dienen, die anhand einer elektronischen Straßenkarte und/oder anhand eines Satellitenbilds gewonnen werden. Dieses Ausführungsbeispiel betrifft insofern insbesondere Fahrzeuge, die über ein Navigationssystem verfügen. Beispielsweise können einer elektronischen Karte entnommene Informationen über die Art eines Verkehrsknotens und/oder den Verlauf der aktuell befahrenen Straße zur vorteilhaften Festlegung des dargestellten Umgebungsausschnitts genutzt werden. Dies birgt insbesondere bei komplexen Verkehrsknoten mit häufigen Richtungswechseln große Vorteile. So kann beispielsweise das optimale Verhalten des Systems automatisch eingestellt werden abhängig davon, ob sich das Fahrzeug in einem Kreisverkehr oder kurz vor einer Tunneleinfahrt befindet. Gemäß einem anderen Beispiel kann bei Erkennung eines Fahrzeugschleuderns der Umgebungsausschnitts unter Kompensation der schleuderbedingten Fahrzeugdrehung stets entlang der zuvor befahrenen Straße ausgerichtet werden. Die hierzu erforderliche laufende Bestimmung der Ausrichtung des Fahrzeuges relativ zum Verlauf der Straße ist auf Basis eines Navigationssystems durchführbar. Auch Vorwissen über das Vorhandensein größerer Objekte, welche die Sicht in eine bestimmte verkehrstechnisch relevante Richtung behindern könnten, und die relative Position des Kraftfahrzeugs bezüglich dieser Objekte kann bei der Festlegung des Umgebungsausschnitts berücksichtigt werden. Der Umgebungsausschnitt kann dann so festgelegt werden, dass nicht "erfolglos" versucht wird, verdeckte Umgebungsteile darzustellen, sondern stattdessen unverdeckte Umgebungsteile umso besser dargestellt werden. Beispielsweise kann Vorwissen über das Vorhandensein von Häuserblocks oder Tunnels in der Umgebung des Fahrzeugs herangezogen werden. Solches Vorwissen ist bereits auf Basis heute marktüblicher Navigationskarten zugänglich. Zudem können Satellitenkarten, die beispielsweise durch Internet-Dienstleister zur Verfügung gestellt werden, ausgewertet werden, um eine sinnvolle automatische Festlegung des Umgebungsausschnitts vorzunehmen oder zumindest zu beeinflussen.

Vorwissen der oben genannten Art kann einerseits genutzt werden, um frühere Fahrzeugpositionen in verbessertem Maße abzudecken, da von dem Vorwissen auf den Straßenverlauf und somit die wahrscheinlichsten früheren Fahrzeugpositionen geschlossen werden kann. Vorwissen über die Umgebung des Fahrzeugs und/oder aktuelle Zusatzinformationen kann aber auch genutzt werden, um situativ von einer Abdeckung früherer Fahrzeugpositionen abzuweichen, beispielsweise um einen Umgebungsausschnitt darzustellen, aus welchem eine Gefahr drohen könnte oder aktuell droht.

Insbesondere auf die letztgenannten Fälle zielt ein weiteres Ausführungsbeispiel für ein Verfahren zur Anzeigesteuerung ab. Dabei kann die Anpassung des dargestellten Umgebungsausschnitts abhängig von einer prädizierten Trajektorie des Fahrzeuges und/oder seinen kinematischen Parametern auf eine in der nahen Zukunft zu erwartende Position hin optimiert werden. Es wird dann gewissermaßen berechnet, welcher Richtungswinkel zu einem bestimmten Zeitpunkt in der nahen Zukunft relevant sein wird. Dies hat zum einen den Vorteil, dass die Wirkungsweise des Systems beschleunigt werden kann, insbesondere in dem Fall, dass ein Richtungswechsel der bildgebenden Vorrichtung - der bereits angesprochene virtuelle Schwenk - relativ lange Zeit benötigt. Insbesondere bei der Verwendung eines Radarsystems als Aufnahmemittel im Sinne der Erfindung kann es vorteilhaft sein, eine gewisse Totzeit bzw. Zeitkonstante für einen solchen Schwenk auf diese Art und Weise zumindest teilweise zu kompensieren. Zum anderen benötigt der Fahrer selbst typischerweise eine gewisse Zeit zur Interpretation des Inhalts eines Bildes bzw. Bildstroms. Somit kann in bestimmten Situationen zu einer schnelleren Reaktion des Fahrers beigetragen werden, indem der Umgebungsausschnitt, der für den Fahrer im nächsten Moment relevant sein wird, bereits zum aktuellen Zeitpunkt dargestellt wird. Insbesondere aus dem zweitgenannten Grund ist diese Umsetzungsvariante insbesondere dann von großem Vorteil, wenn bekannt ist - beispielsweise aus Daten einer Fahrzeug-zu-Fahrzeug-Kommunikation - dass zu einem zukünftigen Zeitpunkt ein bestimmtes Ereignis eintreten oder sichtbar werden wird.

Bei einem insbesondere mit dem zuletzt beschriebenen Ausführungsbeispiel gut vereinbaren weiteren Ausführungsbeispiel für ein Verfahren zur Anzeigesteuerung wird der dargestellte Umgebungsausschnitt auf eine oder mehrere Richtungen ausgerichtet, aus welchen andere Verkehrsteilnehmer sich dem Fahrzeug nähern bzw. nähern könnten. Solche Richtungen können insbesondere anhand von Vorwissen über die Fahrzeugumgebung, beispielsweise aus einer elektronischen Straßenkarte oder einer Satellitenkarte ermittelt werden. Die Bestimmung der relevanten Richtungen (im Koordinatensystem einer Karte) kann auch anhand einer eventuell in elektronischem Kartenmaterial enthaltenen Unfallstatistik zu bestimmten Orten durchgeführt werden. Wenn beispielsweise für einen bestimmten Verkehrsknoten oder eine bestimmte Kurve eine deutlich erhöhte Unfallrate bekannt ist, können durch ein entsprechend weitergebildetes Verfahren beispielsweise anhand der Navigationskarte spezielle Lösungen aktiviert werden. Außerdem kann berücksichtigt werden, wenn das eigene Fahrzeug in einer ungünstigen Verkehrssituation stehen bleibt. Zudem kann die auf Basis von Umfeldsensorik und/oder drahtloser Kommunikationstechnologie (funkbasierte Car-to-Car-Communication und/oder RFID) detektierte Anwesenheit bzw. Annäherung anderer Verkehrsteilnehmer und/oder die Anwesenheit von Verkehrszeichen berücksichtigt werden. Auch Letztere können von dem Kraftfahrzeug - bei entsprechender technischer Ausrüstung auf Kraftfahrzeugseite und Infrastrukturseite - ebenso wie Kreuzungen und Abzweigungen nicht nur auf Basis von Kartendaten und Umfeldsensoren, sondern auch auf Basis drahtloser Kommunikationstechnologien (insbesondere RFID) erkannt werden.

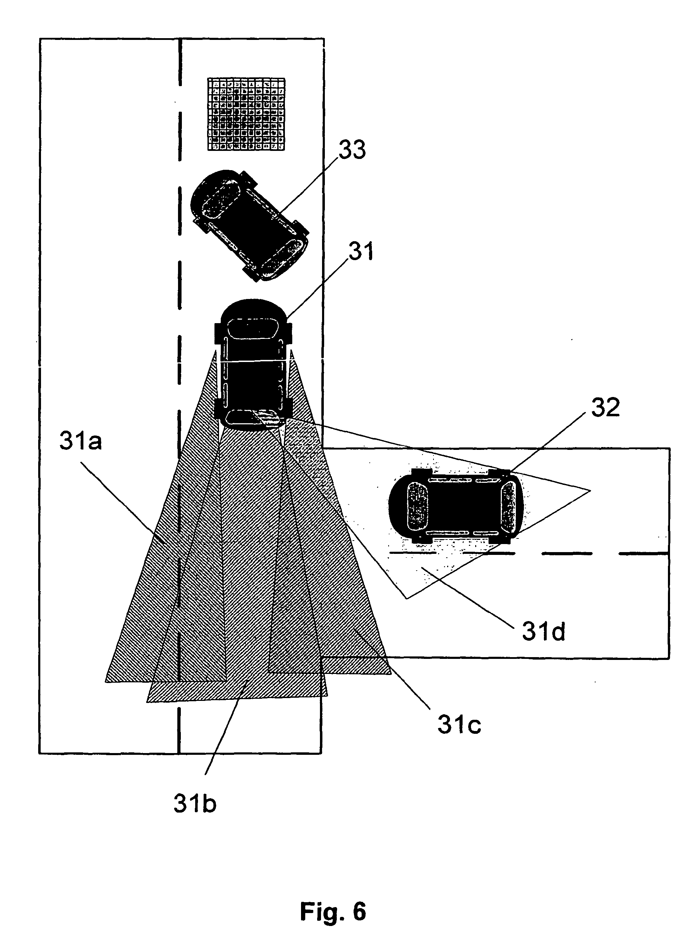

Fig. 6 veranschaulicht eine solche Situation. Die Weiterfahrt des Fahrzeugs 31 wird durch das Fahrzeug 33 blockiert. Der Umgebungsausschnitt, der dem Fahrer von Fahrzeug 31 durch die Anzeigeeinheit von Fahrzeug 31 dargestellt wird, wird so festgelegt, dass der Sichtwinkelausschnitt 31 d in einer Richtung ausgerichtet ist, aus der sich andere Verkehrsteilnehmer, hier das Fahrzeug 32, dem Fahrzeug 31 nähern bzw. nähern könnten. In den Sichtwinkelausschnitten 31a, 31 b, 31c der konventionellen Rückspiegel des Fahrzeugs 31 ist das Fahrzeug 32 hingegen nicht enthalten. Eine solche situativ eingreifende Variante der Anzeigesteuerung kann beispielsweise in die Praxis umgesetzt werden, indem die aktuelle Verkehrssituation laufend klassifiziert wird und indem die zu einer bestimmten Situationsklasse gehörige Reaktion einer eventuell bei einem Fahrzeug vorhandenen Anzeigesteuerungseinheit ermittelt wird anhand von Reaktionsdaten eines Navigationssystems, welches ein satellitengestütztes Positionsbestimmungssystem und eine entsprechende Reaktionsdaten enthaltende elektronische Straßenkarte umfasst, und gegebenenfalls anhand der Geschwindigkeit des Fahrzeugs. Die Reaktionsdaten des Navigationssystems müssten im Fall von Fig. 6 beispielsweise eine Überwachung der rechts einmündenden Seitenstraße vorsehen, auf der sich in der aktuellen Situation Fahrzeug 32 nähert.

Bei einem anderen, hier nur kurz besprochenen Ausführungsbeispiel für ein Verfahren zur Anzeigesteuerung wird der dargestellte Umgebungsausschnitt anhand einer aktuellen Analyse der Verkehrssituation in der Fahrzeugumgebung festgelegt bzw. angepasst. Insbesondere andere Verkehrsteilnehmer und andere bewegte Objekte in der Fahrzeugumgebung können verbessert als Hindernisse und Gefahrenquellen berücksichtigt werden, wenn der Umgebungsausschnitt in bestimmten Situationen auf diese anderen Verkehrsteilnehmer bzw. Objekte ausrichtbar ist. Der Fahrer kann so zusätzlich zu seinem "normalen" Sichtfeld auf die momentan verkehrstechnisch relevanten Umfeldbereiche aufmerksam gemacht werden und Einblick in diese erhalten. Als Kriterium zum Eingreifen einer Festlegung anhand von Ergebnissen einer solchen Umfeldanalyse kann beispielsweise eine Relativgeschwindigkeit anderer Verkehrsteilnehmer zum eigenen Fahrzeug dienen. Eine solche situativ eingreifende Variante der Anzeigesteuerung kann in der Situation von Fig. 6 ebenfalls dazu führen, dass der Sichtwinkelausschnitt 31d in die Richtung ausgerichtet wird, aus der sich Fahrzeug 32 dem Fahrzeug 31 nähert. Allerdings ist dies nun, anders als beim vorherigen Beispiel, nicht durch eine Überwachung der Seitenstraße als solcher bedingt, sondern durch einen Schwenk des dargestellten Umgebungsausschnitts gezielt in die Richtung von Fahrzeug 32.

Bei einem anderen, weiter oben bereits angedeuteten Ausführungsbeispiel für ein Verfahren zur Anzeigesteuerung wird der dargestellte Umgebungsausschnitt anhand einer drahtlosen Kommunikation des Kraftfahrzeugs mit zumindest einem anderen Verkehrsteilnehmer festgelegt. Die Kommunikation kann direkt zwischen den Fahrzeugen oder über eine Infrastruktur erfolgen, die gegebenenfalls auch Daten der vernetzten Fahrzeuge aufbereitet weitergeben kann. Durch ein solches Verfahren kann die Annäherung eines anderen entsprechend vernetzten Fahrzeuges sowohl gemeldet als auch gegebenenfalls automatisch dem Fahrer angezeigt werden. Zur Anzeige kann die Anzeigesteuerungseinheit den dargestellten Umgebungsausschnitt so wählen, dass das sich nähernde Fahrzeug in diesem enthalten ist. Als Informationsquellen können bei einem solchen Verfahren dienen eine Satellitenkommunikation, rundfunkvermittelte Staumeldungen, Satellitenbilder und/oder sonstige Infrastruktureinrichtungen. Alternativ oder zusätzlich kann auch eine Sensierung der Umgebung durch Umfeldsensoren des Kraftfahrzeugs stattfinden. Mittels einer hierauf basierenden Objekterkennung können beispielsweise andere, relativ schnell auf die Trajektorie des eigenen Kraftfahrzeugs zu bewegte Verkehrsteilnehmer erfasst und getrackt, d.h. anhand einer adaptiven Festlegung des dargestellten Umgebungsausschnitts verfolgt, werden.

Im Falle mehrerer Richtungen bzw. Objekte, auf die der Fahrer aufmerksam gemacht werden soll, kann das dem Fahrer dargestellte Anzeigebild aus mehreren relevanten Umgebungsausschnitten elektronisch zusammengefügt werden.

Bei einem Wechsel der Richtung des darzustellenden Umgebungsausschnitts bezüglich des Kraftfahrzeugs kann die Vorrichtung statt eines abrupten Sprungs einen gleitenden Übergang schaffen, indem der dargestellte Umgebungsausschnitt sich gleitend von der bisherigen zur neuen Richtung bewegt. Es ergibt sich ein aus Sicht des Fahrers stufenloser Scroll-Vorgang. Der Fahrer behält somit leichter die Orientierung bezüglich des Informationsgehalts des Anzeigebilds.

Die Festlegung des dargestellten Umgebungsausschnitt kann, wie die zuletzt geschilderten Ausführungsbeispiele verdeutlichen, von mehreren Faktoren abhängen. Grundsätzlich dient die hier beschriebene Vorrichtung der Überwachung der zuletzt befahrenen Fahrbahnbereiche. In Ausnahmefällen kann aber situativ gezielt hiervon abgewichen und der dargestellte Umgebungsausschnitt anders festgelegt werden, etwa auf ein sich näherndes anderes Fahrzeug. Die geschilderten situativen Abweichungen von einer Überwachung der zuletzt befahrenen Fahrbahnbereiche durch die hier beschriebene Vorrichtung können dabei beispielsweise im Stile eines Interrupts in der entsprechenden Situation aktiviert werden bzw. eingreifen. Die Gewichtung solcher Faktoren bei der Festlegung des dargestellten Umgebungsausschnitts kann also nach vorgegebenen Aktivierungsregeln abhängig sein von der Art der Verkehrssituation. Sie kann aber alternativ oder zusätzlich auch abhängig von diesbezüglichen Einstellungen des Benutzers variabel geregelt werden.

Dem Fahrer kann hierzu eine Bedienmöglichkeit zur manuellen Einstellung zur Verfügung gestellt werden, um Gewichtungen zu variieren, mit denen die verschiedenen Einflussgrößen versehen werden, anhand derer der dargestellte Umgebungsausschnitts festlegbar ist. Es können auch vordefinierte und/oder vom Fahrer veränderbare Gewichtungsprofile für verschiedene Situationen, etwa Autobahn, Landstraße oder Stadt mit und ohne Stau als vordefinierte automatische Einstellungen vorgesehen sein.

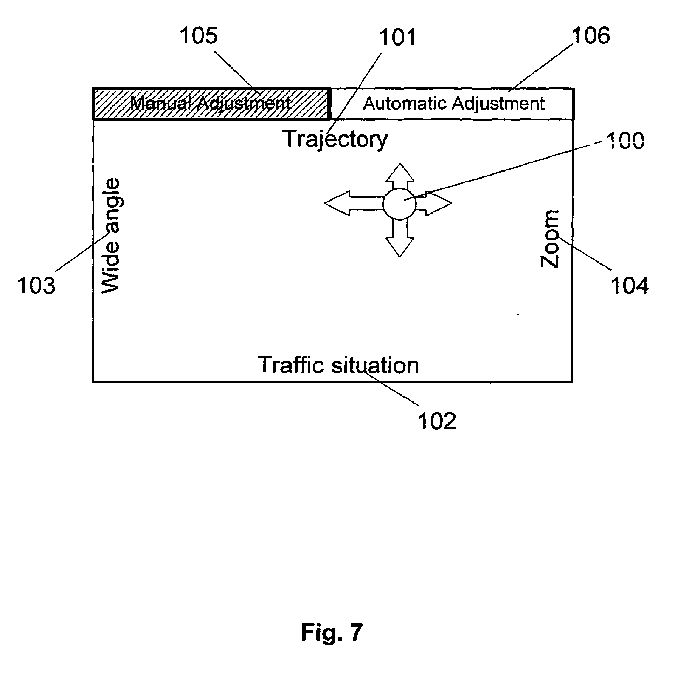

Fig. 7 zeigt eine Bedienoberfläche, anhand der entsprechende Einstellungen des Benutzers an die hier beschriebene Vorrichtung kommandiert werden können. In der oberen Zeile von Fig. 7 sind die grundsätzlichen Optionen "manuelle Einstellung" bzw. "Manual Adjustment" 105, oder "automatische Einstellung" bzw. "Automatic Adjustment" 106 im Stile von so genannten Reitern dargeboten.

Bei der im vorliegenden Fall gewählten manuellen Einstellung kann die vertikale Position eines Punktes 100 und somit die Gewichtung der konkurrierenden Festlegungs-Einflüsse "Trajektorie" bzw. "Trajectory" 101 und "Verkehrssituation" bzw. "Traffic Situation" 102 vorgegeben werden. Die Vorgabe des Bedieners erfolgt beispielsweise mit Hilfe eines Touch Screens oder durch die Verschiebung eines Dreh-/Druck-Stellers. Wenn der Punkt 100 nach unten verschoben wird, weicht die Vorrichtung in einer höheren Anzahl besonderer Verkehrssituationen von der Hauptaufgabe der Überwachung der zuletzt befahrenen Fahrbahnbereiche ab. Wenn der Punkt 100 nach oben verschoben wird, geschieht dies in einer geringeren Anzahl besonderer Verkehrssituationen.

Ebenso kann die horizontale Position des Punktes 100 und somit die Gewichtung der konkurrierenden Festlegungs-Einflüsse "Weitwinkel" bzw. "Wide angle" 103 und "Vergrößerung" bzw. "Zoom" 104 vorgegeben werden. Wenn der Punkt 100 nach links verschoben wird, stellt die Vorrichtung im Falle mehrerer verkehrsrelevanter Richtungen tendenziell eine weitwinklige Perspektive ein, um möglichst all diese Richtungen im dargestellten Umgebungsausschnitt abzudecken. Bei weiter nach rechts verschobenem Punkt 100 wird eher auf eine einzige, nämlich die als am kritischsten bzw. wichtigsten eingestufte, Blickrichtung gezoomt.

Nach der obigen Betrachtung verschiedener Varianten der Anzeigesteuerung soll nun näher auf die Wiedergabe des Bildausschnitts eingegangen werden. Diese Wiedergabe erfolgt erfindungsgemäß derart, dass zusätzlich zur bloßen Darstellung des Umgebungsausschnitts zumindest eine optische Information betreffend die Lage des Umgebungsausschnitts bezüglich des Kraftfahrzeugs an den Fahrer ausgegeben wird.

Gemäß einem bevorzugten Ausführungsbeispiel für die Erfindung wird die Darstellung des Umgebungsausschnitts durch die Anzeigeeinheit von einer symbolischen Darstellung begleitet, die auf die Lage des aktuell dargestellten Umgebungsausschnitts relativ zum Kraftfahrzeug hinweist.

Die symbolische Darstellung kann im einfachsten Fall realisiert werden durch eine bildliche Darstellung der Richtung des dargestellten Umgebungsausschnitts relativ zum Kraftfahrzeug. Diese bildliche Darstellung kann insbesondere eine bildliche Repräsentation des Fahrzeugs selbst enthalten. Die bildliche Darstellung kann insbesondere auch die Relation zwischen einer Bezugsachse des Fahrzeugs, beispielsweise der Fahrzeuglängsachse und der Blickrichtung vom Fahrzeug auf den Umgebungsausschnitt zeigen bzw. verdeutlichen. Beispielsweise kann eine Draufsicht auf das Kraftfahrzeug aus der Vogelperspektive dargestellt sein und die Blickrichtung vom Fahrzeug auf den Umgebungsausschnitt wird durch einen von dem Fahrzeug ausgehenden Pfeil und/oder einen sich öffnenden Strahl dargestellt. Die Länge eines solchen Pfeils oder der Öffnungswinkel eines solchen Strahls kann zudem den Zoomfaktor repräsentieren.

Eine solche bildliche Darstellung oder eine andere symbolische Darstellung kann insbesondere erzeugt werden hinter einer halbdurchsichtigen Spiegelschicht eines Fahrzeugrückspiegels. Der Fahrer, der den Spiegel in an sich konventioneller Weise nutzt, wird durch diese zusätzliche bildliche Darstellung in ergonomischer Art und Weise informiert, welche zusätzliche Information ihm durch eine unter Umständen an ganz anderer Stelle im Fahrzeuginneren angeordnete Anzeigeeinheit zur Verfügung gestellt wird. Besonders vorteilhaft ist eine Einblendung der bildlichen Darstellung in den Innenspiegel des Fahrzeuges.

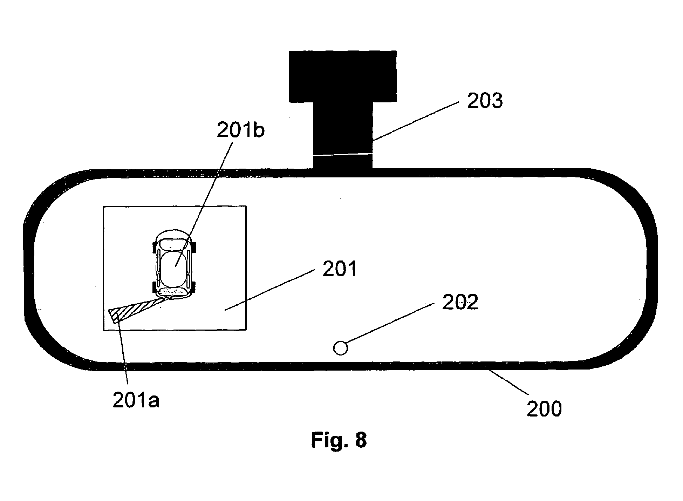

Die Einblendung der bildlichen Darstellung in einen Rückspiegel stellt in besonders eleganter Art und Weise einen Bezug her zwischen der Nutzung konventioneller Rückspiegel und der Erfindung. Die hier beschriebene Vorrichtung kann nämlich selbstverständlich als rein additiver Zusatz zu konventionellen Rückspiegeln eingesetzt werden. Dadurch ist auch ein eventueller Ausfall oder ein Fehlverhalten der Elektronik, durch welche die Erfindung umgesetzt wird, in der Regel nicht als sicherheitskritisch anzusehen. Selbst wenn eine erfindungsgemäß als Aufnahmemittel verwendete Kamera oder eine entsprechende elektronische Steuerungseinheit versagt oder sich gar ein lokaler Stromausfall ereignet, bleibt dem Fahrer die konventionelle Spiegelansicht erhalten. Fig. 8 zeigt schematisch eine mögliche Ausführungsform eines Innenspiegels 200 mit Halterung 203 und Helligkeitssensor 202 und mit der Möglichkeit zur Anzeige einer bildlichen Darstellung (Feld 201), die auf die Lage des aktuell dargestellten Umgebungsausschnitts relativ zum Kraftfahrzeug hinweist. Im vorliegenden Fall ist dies durch einen Strahl 201 a realisiert, an dessen Ausrichtung bezüglich des Abbilds 201 b des Kraftfahrzeugs sich der Fahrer orientieren kann. Der Umgebungsausschnitt selbst wird indes durch eine beispielsweise in der Mittelkonsole des Fahrzeugs angeordnete Anzeigeeinheit dargestellt.

Es kann zusätzlich zu einer symbolischen Darstellung, die auf die Lage des aktuell dargestellten Umgebungsausschnitts relativ zum Kraftfahrzeug hinweist, aber auch der den Umgebungsausschnitt darstellende Bildausschnitt selbst hinter einer solchen halbdurchsichtigen Spiegelschicht eines Fahrzeuginnenspiegels erzeugt werden. Der Fahrer muss seine Blickrichtung dann nicht wesentlich verändern, um entweder den in die Spiegelfläche eingeblendeten Umgebungsausschnitt oder das eigentliche Spiegelbild zu betrachten. Zur besseren Einordnung bzw. Interpretation wird dem Fahrer durch die zusätzliche bildliche Darstellung veranschaulicht, welchen Umgebungsausschnitt ihm der ebenfalls eingeblendete Bildausschnitt zeigt.

Damit das eigentliche Spiegelbild weiterhin zur Verfügung steht, ist die nicht zur Darstellung des Umgebungsausschnitts genutzte Spiegelfläche vorzugsweise weiterhin als Spiegel im eigentlichen Sinne verwendbar. Auch bei einem Ausfall oder Fehlverhalten der Anzeigeeinheit bzw. der Elektronik der hier beschriebenen Vorrichtung bleibt der Rückspiegel konventionell nutzbar.

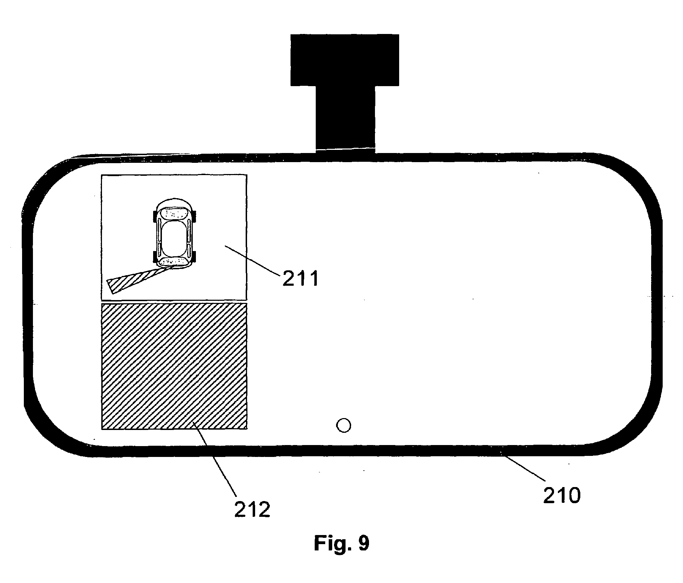

Fig. 9 zeigt schematisch eine mögliche Ausführungsform eines Innenspiegels 210 mit der Möglichkeit zur Anzeige einer bildlichen Darstellung, die auf die Lage des aktuell dargestellten Umgebungsausschnitts relativ zum Kraftfahrzeug hinweist (Feld 211), und eines Umgebungsausschnitts (Feld 212). Das Feld 211 kann mittels durchleuchtender Anzeigeeinheiten (wie z.B. bei einem Taxometer) realisiert werden, das Feld 212 durch ein TFT-Display. Es können aber auch beide Felder 211 und 212 durch ein gemeinsames TFT-Display realisiert werden.

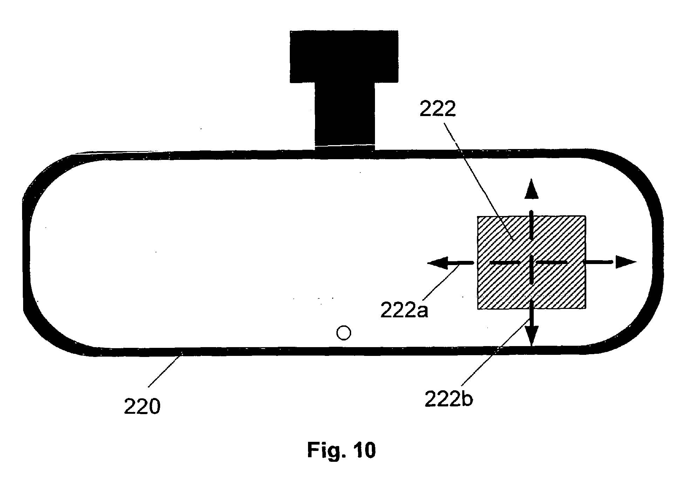

Besonders vorteilhaft ist eine Ausführung in der Art, dass die Anordnung des Umgebungsausschnitts innerhalb der Spiegelfläche abhängig ist von der Lage des Umgebungsausschnitts bezüglich des Kraftfahrzeugs. Eine Lage des Umgebungsausschnitts rechts hinter dem Kraftfahrzeug kann sich dann etwa in einer Anordnung des Umgebungsausschnitts rechts unten innerhalb der Spiegelfläche äußern. Um dies zu ermöglichen, muss in den Rückspiegel eine Anzeigeeinheit integriert sein, die größer ist als die Anzeige des Umgebungsausschnitts selbst. Sie kann sich sogar über die gesamte Spiegelfläche erstrecken. Damit das eigentliche Spiegelbild in den jeweils nicht zur Anzeige des Umgebungsausschnitts genutzten Teilen einer solchen Anzeigeeinheit weiterhin zur Verfügung steht, ist die nicht zur Darstellung des Umgebungsausschnitts genutzte Anzeigefläche vorzugsweise in einen spiegelnden Zustand versetzbar, solange sie nicht zur Anzeige des Umgebungsausschnitts benötigt wird. Im einfachsten Fall ist dies umsetzbar, indem eine halbdurchsichtige Spiegelfläche die Anzeigeeinheit überdeckt. Die halbdurchsichtige Spiegelfläche spiegelt, d.h. sie wird in einen spiegelnden Zustand versetzt, in allen Bereichen, die nicht von der Anzeigeeinheit hinterleuchtet werden. Wieder bleibt auch bei einem Ausfall der Anzeigeeinheit der Rückspiegel konventionell nutzbar. Fig. 10 zeigt schematisch eine mögliche Ausführungsform eines Innenspiegels 220 mit der Möglichkeit zur Anzeige des Umgebungsausschnitts (Feld 222) an einer der Lage des Umgebungsausschnitts bezüglich des Kraftfahrzeugs entsprechenden Stelle der Spiegelfläche. Die nicht tatsächlich für den Fahrer sichtbar angezeigten Pfeile 222a und 222b verdeutlichen nur zu Erklärungszwecken die Verschiebbarkeit des Felds 222 innerhalb der Spiegelfläche. Auf eine zusätzliche bildliche Darstellung, die auf die Lage des aktuell dargestellten Umgebungsausschnitts relativ zum Kraftfahrzeug hinweist (vergleichbar mit Feld 211 aus Fig. 9) kann, muss jedoch nicht, bei solcher Ausführung verzichtet werden.

Weitere Ausführungsbeispiele für die Erfindung, die ebenfalls eine Darstellung des Umgebungsausschnitts in Abhängigkeit von der Lage des Umgebungsausschnitts bezüglich des Kraftfahrzeugs und/oder eine Darstellung des Umgebungsausschnitts begleitet von einer symbolischen Darstellung der Lage des Umgebungsausschnitts bezüglich des Kraftfahrzeugs vorsehen, beziehen sich auf ein Head-up-Display des Kraftfahrzeugs. Die Einblendung von Informationen mittels eines Head-up-Display ist als besonders vorteilhaft zu erachten, da der Fahrer seinen Blick nicht vom Fahrgeschehen abwenden muss, um die Information wahrzunehmen und zu interpretieren.

Durch ein mehrfarbiges Head-Up-Display des Kraftfahrzeugs kann der den Umgebungsausschnitt darstellende Bildausschnitt ohne wesentliche weitere Aufbereitung dargestellt werden. Durch ein monochromes Head-Up-Display hingegen kann der den Umgebungsausschnitt darstellende Bildausschnitt beispielsweise dargestellt werden, indem der Bildausschnitt in eine Bitmap-Grafik gewandelt wird. Dabei kann die Häufigkeit der hellen Punkte in einem Bildbereich der Helligkeit des Bildbereiches entsprechen (Dithering). Sofern verschiedene Graustufen darstellbar sind, kann der Bildausschnitt auch in ein entsprechendes Graubild gewandelt werden.

Auch bei der Darstellung durch ein Head-up-Display kann die Position des den Umgebungsausschnitt darstellenden Bildausschnitts in Bezug auf unbewegliche Teile des Fahrzeugs abhängig von der Lage des Umgebungsausschnitts bezüglich des Kraftfahrzeugs festgelegt werden. Der Bildausschnitt kann entsprechend dieser Lage beispielsweise innerhalb eines gewissen Rahmens der gesamten Anzeigefläche des Head-up-Displays oder auch innerhalb der gesamten Anzeigefläche des Head-up-Displays wandern. Die restliche Anzeigefläche bleibt für andere Zwecke verfügbar. Sie kann entweder für andere Anzeigen genutzt werden oder bleibt volltransparent, um dem Fahrer einen ungehinderten Blick auf das Fahrgeschehen zu ermöglichen.

Auch eine Bedienoberfläche zur Veränderung von Einstellungen, wie etwa dargestellt in Fig. 7, kann im Head-up-Display dargestellt werden. Ebenso können auch nur die aktuellen Einstellungen in ausführlicher oder knapper symbolischer Form im Head-up-Display dargestellt werden. Insbesondere Letzteres kann selbstverständlich gleichzeitig mit der Darstellung des Bildausschnitts selbst geschehen. Der Fahrer kann sich dann stets alleine anhand der Anzeige des Head-up-Display vergewisssern, nach welchen Kriterien der dargestellte Umgebungsausschnitt ausgewählt wird bzw. wurde.

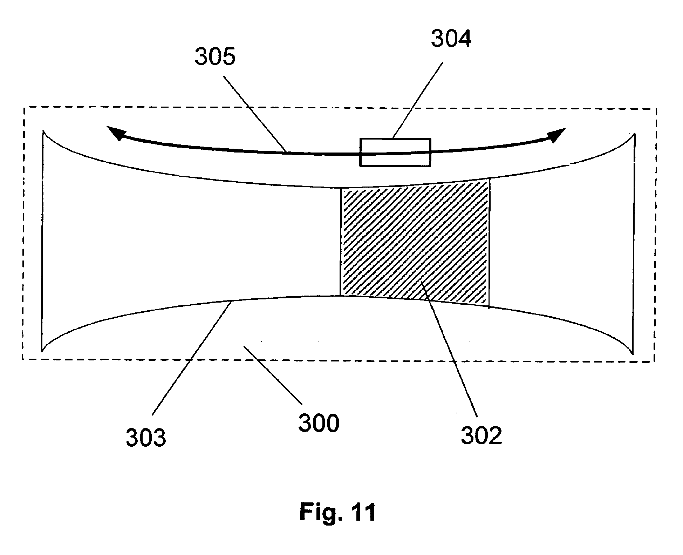

Neben einer Variation der Position des Bildausschnitts im Head-up-Display abhängig von der Lage des Umgebungsausschnitts bezüglich des Kraftfahrzeugs kann der Bildausschnitt auch einer geometrischen Transformation unterzogen werden, die auf den dargestellten Raum- oder Winkelbereich hinweist. Insbesondere kann eine solche geometrische Transformation derart ausgestaltet sein, dass sie durch ihre Krümmung, Schattenbildung etc. einen räumlichen Eindruck erzeugt. Fig. 11 zeigt einen entsprechend transformierten Bildausschnitt 302. Vorteilhafterweise wird somit ein räumlicher Eindruck auch ohne eine tatsächliche Verwendung von 3D-Technik zur stereoskopische Darstellung erzeugt.

Der Bildausschnitt 302 aus Fig. 11 ist zudem entsprechend der Verschiebbarkeit des Bildausschnitts 222 aus Fig. 10 in der Anzeigefläche 300 des Head-up-Display verschiebbar. Gewissermaßen als Rahmen zur Führung dieser Verschiebung kann ein Rahmen 303 vorgesehen sein, an dem der Bildausschnitt beim Verschieben entlang gleitet. Die Form des Rahmens 303 und die Verzerrung des Bildausschnitts 302 veranschaulichen dann gemeinsam die Möglichkeit eines rotatorischen Schwenks um das Kraftfahrzeug, dem der dargestellte Umgebungsausschnitt unterzogen werden kann. Auch die Position des Bildausschnitts 302 innerhalb des Rahmens 303 gibt dem Fahrer bereits Aufschluss bezüglich der Lage des dargestellten Umgebungsausschnitts bezüglich des Kraftfahrzeugs. Die genannte Verzerrung erleichtert die Interpretation jedoch zusätzlich.

Alternativ oder zusätzlich (im Falle von Fig. 11 zusätzlich) kann zur weiteren Veranschaulichung ein symbolisches Abbild 304 des Bildausschnitts 302 dargestellt werden, das entlang einer Führungslinie 305 verschoben wird. Diese vereinfachte symbolische Darstellungsform kann auch eigenständig Anwendung finden, was in etwa dem Informationsgehalt des für den Fall der Einblendung in einen Innenspiegel anhand von Fig. 8 gezeigten Ausführungsbeispiels entspricht.

In gleicher oder ähnlicher Art und Weise können gleichzeitig auch mehrere Bildausschnitte, die jeweils einen Umgebungsausschnitt zeigen, in der Anzeigefläche dargestellt werden. Die mehreren Umgebungsausschnitte müssen dabei nicht miteinander verbunden sein bzw. aneinander angrenzen, ebenso wenig die Bildausschnitte. Die Anordnung und gegebenenfalls Verzerrung jedes der Umgebungsausschnitte innerhalb der Anzeigefläche wird vorzugsweise jeweils entsprechend der Lage des jeweiligen Umgebungsausschnitts bezüglich des Kraftfahrzeugs gewählt. Bei einer Anpassung der Umgebungsausschnitte "wandern" die Bildausschnitte dementsprechend innerhalb der Anzeigefläche.

Gemäß einem anderen Ausführungsbeispiel für die Erfindung werden stereoskopische Anzeigemittel verwendet, um den Bildausschnitt in der Ansicht des Fahrers des Kraftfahrzeugs in einer virtuellen Ebene darzustellen, die durch ihre Ausrichtung und/oder Krümmung auf die Lage des im Bildausschnitt dargestellten Umgebungsausschnitts bezüglich des Kraftfahrzeugs hinweist. Bei einer Anpassung des Umgebungsausschnitts wird diese virtuelle Ebene vorzugsweise mit der Anpassung schritthaltend weiter verdreht bzw. gekrümmt. Sofern die verwendete Anzeigetechnik dies zulässt, kann der virtuelle Raum, in dem die virtuelle Ebene ausgerichtet bzw. gekrümmt wird, beliebig - beispielsweise halbsphärisch in die Spiegelebene bzw. die Windschutzscheibenebene (bei einem Head-up-Display) hinein gekrümmt sein. Um eine solche Ausführungsform der Erfindung im Zusammenhang mit einer Einblendung des den Umgebungsausschnitt darstellenden Bildausschnitts in einen Rückspiegel zu realisieren, kann ein stereoskopisches TFT-Display verwendet werden. Solche Displays, die eine stereoskopische Wahrnehmung ohne das Tragen sperriger Hilfsmittel wie einer Shutter-Brille oder eines Head-Mount-Display erlauben, sind mittlerweile marktverfügbar und können, wie oben bereits für herkömmliche Displays beschrieben, hinter einer teiltransparenten Spiegelfläche des Rückspiegels untergebracht werden.

Gemäß einer bevorzugten Ausführungsform der vorliegenden Erfindung wird eine störungsbedingte Ablenkung der als Aufnahmemittel dienenden bildgebenden Vorrichtung von ihrer Sollposition, die beispielsweise in Höhe und Winkel errechnet vorliegen kann, mittels einer der Störung entgegen wirkenden dynamischen Auswahl des Bildausschnitts kompensiert. Eine solche störungsbedingte Ablenkung kann beispielsweise verursacht werden durch eine Nick-und/oder Rollbewegung des Fahrzeugs. Ersteres wiederum kann insbesondere aus einer veränderten Fahrbahnsteigung, Letzteres aus einer schnellen Kurvenfahrt resultieren. Als Messgrößen, an denen orientiert die Kompensation vorgenommen wird, können bestimmte ohnehin im Fahrzeug verfügbare Signale dienen, beispielsweise Signale der Fahrwerkstabilisierung, Luftfederung etc. Durch die Kompensation wird auch bei einer Änderung der Steigung der Fahrbahn oder bei einer schnellen Kurvenfahrt der darzustellende Umgebungsausschnitt korrekt dargestellt.

Eine solche störungsbedingte Ablenkung kann beispielsweise auch verursacht werden durch eine Fahrtvibration der bildgebenden Vorrichtung. Gemäß einer alternativ oder zusätzlich anwendbaren bevorzugten Ausführungsform der vorliegenden Erfindung wird demnach eine Fahrtvibration der bildgebenden Vorrichtung von ihrer errechneten Sollposition, mittels dynamischer Auswahl des dargestellten Sichtfeldes kompensiert. Auch dabei kann zur Steuerung bzw. Regelung der entsprechenden Bild-Stabilisator-Einheit fahrzeugeigene Sensorik zur Erfassung der Vibration, Beladung, etc. dienen. Hierin besteht ein deutlicher Unterschied zu beispielsweise aus der Camcorder-Technik bekannten Bild-Stabilisatoren.

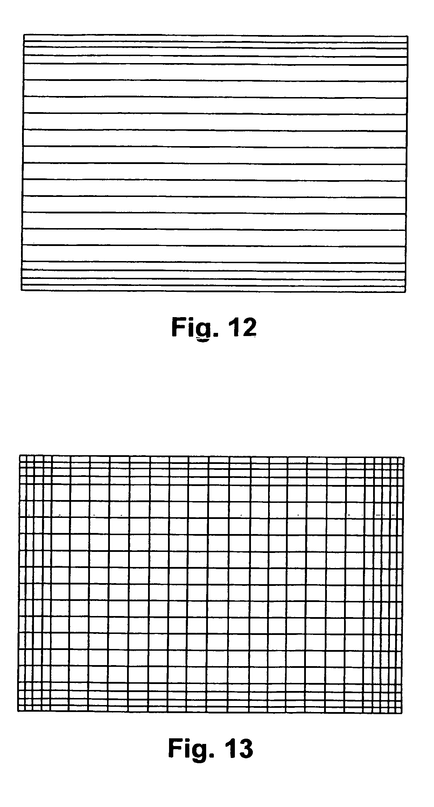

Gemäß einer alternativ oder zusätzlich anwendbaren bevorzugten Ausführungsform der vorliegenden Erfindung wird der anzuzeigende Bildausschnitt vor der Darstellung einer geometrischen Transformation unterzogen, durch welche der Bildausschnitt in wenigstens einem Randbereich gestaucht wird. Fig. 12 und Fig. 13 zeigen mögliche Abbildungsfunktionen für eine solche Stauchung im Randbereich. In Fig. 12 werden nur der obere und untere Randbereich gestaucht, in Fig. 13 alle Randbereiche. Der Hauptbereich in der Bildmitte wird dabei vorzugsweise nicht verzerrt. Er kann sogar aktiv entzerrt werden, um aufnahmebedingte Verzerrungen auszugleichen. In den Randbereichen nimmt die Stauchung zu. Im vorliegenden Fall nimmt die Stauchung monoton zu. Somit wird nahezu das Verhalten eines asphärischen Spiegels nachgebildet. Durch die Stauchung im Randbereich kann bei unveränderter Darstellungsgröße der Bildinhalte im Zentrum eines darzustellenden Umgebungsausschnitts der Umgebungsausschnitts insgesamt größer gewählt werden. Somit kann verhindert werden, dass Objekte in der Umgebung nur deshalb übersehen werden, weil sie gerade nicht mehr im festgelegten Umgebungsausschnitt enthalten sind bzw. waren. Die Randbereiche können bei der Darstellung durch die Anzeigeeinheit als solche gekennzeichnet werden, indem - wie bei einem asphärischen Spiegel - eine Trennlinie zwischen unverzerrtem Hauptbereich und verzerrtem Randbereich eingeblendet wird.

Gemäß einer alternativ oder zusätzlich anwendbaren bevorzugten Ausführungsform der vorliegenden Erfindung ist der dargestellte Umgebungsausschnitt abhängig von Kopf- und/oder Augenbewegungen des Bedieners anpassbar. Beispielsweise ist ein so genanntes Fahrzeug-Innenraumkamerasystem bekannt, das die Kopfposition der Insassen laufend erfasst und (hauptsächlich zur Adaption der Rückhaltesysteme des Fahrzeugs) auswertet. Ein solches für andere Zwecke bereits vorhandenes System kann für die Zwecke dieser Ausführungsform der vorliegenden Erfindung mitverwendet werden. Auf diese Weise wird dem Bediener eine komfortable und intuitive Bedienmöglichkeit eröffnet, die automatische Auswahl des Umgebungsausschnitts zu beeinflussen. Beispielsweise kann das angezeigte Bild bei einer Annäherung des Fahrerkopfes an den Spiegel stärker gezoomt werden, bei einer seitlichen Kopfbewegung (relativ zu einer bisherigen durchschnittlichen Kopfposition des Fahrers) kann es ebenfalls leicht zur Seite schwenken.

## Patentansprüche

1. Verfahren zur Fahrerinformation in einem Kraftfahrzeug,
bei dem durch Aufnahmemittel des Kraftfahrzeugs ein Bildstrom aufgenommen wird, der Bilder zumindest eines Teils der Umgebung des Kraftfahrzeugs beinhaltet,
bei dem durch eine Anzeigeeinheit im Fahrzeuginneren des Kraftfahrzeugs ein in einem reduzierten Ausschnitt des Bildstroms bestehender Bildausschnitt wiedergegeben wird, wobei
bei der Wiedergabe des Bildausschnitts zusätzlich zur Darstellung des Umgebungsausschnitts zumindest eine optische Information betreffend die Lage des Umgebungsausschnitts bezüglich des Kraftfahrzeugs an den Fahrer ausgegeben wird, und die Wiedergabe des Bildausschnitts in Abhängigkeit von der Lage des Umgebungsausschnitts bezüglich des Kraftfahrzeugs erfolgt und
der Bildausschnitt korrespondierend zur Lage des Umgebungsausschnitts bezüglich des Kraftfahrzeugs innerhalb einer größeren Anzeigefläche der Anzeigeeinheit angeordnet wird, **dadurch gekennzeichnet, dass** bei dem Verfahren durch eine Anzeigesteuerungseinheit des Kraftfahrzeugs der Umgebungsausschnitt, der dem Fahrer durch die Wiedergabe des Bildausschnitts mittels der Anzeigeeinheit dargestellt wird, selbsttätig durch Verschieben des gewählten Bildausschnitts im Bildstrom verändert wird, wobei die Aufnahme mittel durch eine Kamera oder mehrere Kameras, die über Lappende oder aneinander angrenzende Teile der Umgebung aufnehmen, gebildet werden.

2. Verfahren nach Anspruch 1, **dadurch gekennzeichnet,**
**dass** die Anzeigeeinheit in die Spiegelfläche eines Rückspiegels des Kraftfahrzeugs integriert oder als Spiegelfläche des Rückspiegels ausgebildet ist und die nicht zur Darstellung des Umgebungsausschnitts genutzte Anzeigefläche in einen spiegelnden Zustand versetzbar ist.

3. Verfahren nach einem der Ansprüche 1 bis 2, **dadurch gekennzeichnet,**
**dass** der Bildausschnitt korrespondierend zur Lage des Umgebungsausschnitts bezüglich des Kraftfahrzeugs verzerrt wiedergegeben wird.

4. Verfahren nach einem der Ansprüche 1 bis 3, **dadurch gekennzeichnet,**
**dass** der Bildausschnitt korrespondierend zur Lage des Umgebungsausschnitts bezüglich des Kraftfahrzeugs in einer bestimmten Ebene einer dreidimensionalen Darstellung angeordnet wird.

5. Verfahren nach einem der Ansprüche 1 bis 4, **dadurch gekennzeichnet,**
**dass** der Bildausschnitt korrespondierend zu einem zur Festlegung des Umgebungsausschnitts verwendeten oder aus der Festlegung des Umgebungsausschnitts resultierenden Zoomfaktor bzw. Öffnungswinkel in einer bestimmten Ebene einer dreidimensionalen Darstellung angeordnet wird.

6. Verfahren nach einem der Ansprüche 1 bis 5, **dadurch gekennzeichnet,**
**dass** die Wiedergabe des Bildausschnitts begleitet wird von einer symbolischen Darstellung der Lage des Umgebungsausschnitts bezüglich des Kraftfahrzeugs.

7. Verfahren nach einem der Ansprüche 1 bis 6, **dadurch gekennzeichnet,**
**dass** die Wiedergabe des Bildausschnitts begleitet wird von einer symbolischen Darstellung eines zur Festlegung des Umgebungsausschnitts verwendeten oder aus der Festlegung des Umgebungsausschnitts resultierenden Zoomfaktors bzw. Öffnungswinkels.

8. Verfahren nach einem der Ansprüche 1 bis 7, **dadurch gekennzeichnet,**
**dass** der Bildausschnitt zumindest zeitweise in zumindest einem Randbereich gegenüber einem mittleren Bildbereich gestaucht ist.

9. Verfahren nach einem der Ansprüche 1 bis 8, **dadurch gekennzeichnet,**
**dass** durch die Anzeigesteuerungseinheit zumindest eine frühere Position des Kraftfahrzeugs bestimmt wird und
**dass** der Umgebungsausschnitt durch die Anzeigesteuerungseinheit in Abhängigkeit von der früheren Position des Kraftfahrzeugs angepasst wird.

## Claims

1. A method for providing driver information in a motor vehicle, in which an image flow containing images of at least a part of the environment of the motor vehicle is recorded by recording means of the motor vehicle, in which an image section comprising a reduced section of the image flow is reproduced by a display unit in the interior of the motor vehicle, wherein when reproducing the image section, in addition to showing the environmental section, at least one piece of optical information relating to the position of the environmental section in relation to the motor vehicle is displayed to the driver, and the image section is reproduced depending upon the position of the environmental section in relation to the motor vehicle and the image section is arranged corresponding to the position of the environmental section in relation to the motor vehicle within a larger display face of the display unit, **characterised in that** in the method, the environmental section, which is shown to the driver by reproducing the image section by means of the display unit, is automatically changed by a display control unit of the motor vehicle by displacing the selected image section in the image flow, wherein the recording means are formed by a camera or a plurality of cameras, which record overlapping or mutually adjoining parts of the environment.

2. A method according to claim 1, **characterised in that** the display unit is integrated into the mirror face of a rear-view mirror of the motor vehicle or is formed as the mirror face of the rear-view mirror and the display face not used to show the environmental section can be transferred into a reflective state.

3. A method according to either of claims 1 or 2, **characterised in that** the image section is reproduced in a distorted manner corresponding to the position of the environmental section in relation to the motor vehicle.

4. A method according to any one of claims 1 to 3, **characterised in that** the image section is arranged, corresponding to the position of the environmental section in relation to the vehicle, in a specific plane of a three-dimensional view.

5. A method according to any one of claims 1 to 4, **characterised in that** the image section is arranged, corresponding to a zoom factor or an aperture angle used to determine the environmental section or resulting from the determination of the environmental section, in a specific plane of a three-dimensional view.

6. A method according to any one of claims 1 to 5, **characterised in that** the reproduction of the image section is accompanied by a symbolic view of the position of the environmental section in relation to the motor vehicle.

7. A method according to any one of claims 1 to 6, **characterised in that** the reproduction of the image section is accompanied by a symbolic view of a zoom factor or aperture angle used to determine the environmental section or resulting from the determination of the environment section.

8. A method according to any one of claims 1 to 7, **characterised in that** the image section is compressed, at least intermittently, in at least one edge region relative to a central image region.

9. A method according to any one of claims 1 to 8, **characterised in that** at least one earlier position of the motor vehicle is determined by the display control unit and **in that** the environmental section is adapted by the display control unit depending on the earlier position of the motor vehicle.

## Revendications

1. Procédé d'information du conducteur d'un véhicule automobile selon lequel des moyens de prise de vue du véhicule prennent une séquence d'images dont les images correspondent au moins à un extrait de l'environnement du véhicule,
procédé selon lequel
une unité d'affichage à l'intérieur du véhicule automobile reproduit un extrait d'image composé d'une partie réduite de la séquence d'images, procédé selon lequel
à la reproduction de l'extrait d'image en plus de la représentation de l'extrait de l'environnement, on émet pour le conducteur au moins une information optique concernant la position de l'extrait de l'environnement par rapport au véhicule, et
la reproduction de l'extrait d'image se fait en fonction de la position de l'extrait de l'environnement par rapport au véhicule, et
l'extrait d'image est disposé de façon à correspondre à la position de l'extrait de l'environnement par rapport au véhicule à l'intérieur d'une surface d'affichage plus grande de l'unité d'affichage,
procédé **caractérisé en ce que**
l'extrait de l'environnement présenté au conducteur par la reproduction de l'extrait d'image par l'unité d'affichage est automatiquement modifié par une unité de commande d'affichage du véhicule, par glissement de l'extrait sélectionné dans la séquence d'images, et
les moyens de prise de vue sont constitués par une ou plusieurs caméras qui prennent des parties en chevauchement ou adjacentes de l'environnement.

2. Procédé selon la revendication 1,
**caractérisé en ce que**
l'unité d'affichage est intégrée dans la surface du rétroviseur du véhicule ou est réalisée comme surface réfléchissante du rétroviseur et la surface d'affichage non utilisée pour la représentation de l'extrait de l'environnement est mise dans un état réfléchissant.

3. Procédé selon les revendications 1 et 2,
**caractérisé en ce que**
l'extrait d'image est reproduit de manière déformée en correspondance avec la position de l'extrait de l'environnement par rapport au véhicule.

4. Procédé selon l'une des revendications 1 à 3,
**caractérisé en ce que**
l'extrait d'image est disposé de façon à correspondre à la position de l'extrait de l'environnement par rapport au véhicule dans un plan déterminé d'une représentation tridimensionnelle.

5. Procédé selon l'une des revendications 1 à 4,
**caractérisé en ce que**
l'extrait d'image est utilisé en correspondance à un extrait de l'environnement à fixer ou à partir du coefficient de zoom ou de l'angle d'ouverture résultant de la fîxation de l'extrait de l'environnement dans un certain plan d'une représentation tridimensionnelle.

6. Procédé selon l'une des revendications 1 à 5,
**caractérisé en ce que**
la reproduction de l'extrait d'image est accompagnée d'une représentation symbolique de la position de l'extrait de l'environnement par rapport au véhicule.

7. Procédé selon l'une des revendications 1 à 6,
**caractérisé en ce que**
la reproduction de l'extrait d'image est affectée du coefficient de zoom ou de l'angle d'ouverture utilisé pour fixer l'extrait de l'environnement ou qui résulte de la fixation de l'extrait de l'environnement.

8. Procédé selon l'une des revendications 1 à 7,
**caractérisé en ce que**
l'extrait d'image est comprimé au moins partiellement dans la zone marginale par rapport à la zone médiane de l'image.

9. Procédé selon l'une des revendications 1 à 8,
**caractérisé en ce que**
l'unité de commande d'affichage définit au moins une position antérieure du véhicule automobile, et
l'extrait de l'environnement est adapté par l'unité de commande d'affichage en fonction de la position antérieure du véhicule automobile.
